(19) Europäisches Patentamt / European Patent Office / Office européen des brevets

(11) **EP 4 081 012 B1**

(12) **EUROPÄISCHE PATENTSCHRIFT**

(45) Veröffentlichungstag und Bekanntmachung des Hinweises auf die Patenterteilung:
**18.09.2024 Patentblatt 2024/38**

(21) Anmeldenummer: **20808068.9**

(22) Anmeldetag: **16.11.2020**

(51) Internationale Patentklassifikation (IPC):
**A01D 34/00** *(2006.01)* **A01D 34/78** *(2006.01)*
**A01D 34/82** *(2006.01)* **B25F 5/00** *(2006.01)*

(52) Gemeinsame Patentklassifikation (CPC):
**A01D 34/824; A01D 34/828; B25F 5/00;**
A01D 34/006; A01D 34/78

(86) Internationale Anmeldenummer:
**PCT/EP2020/082201**

(87) Internationale Veröffentlichungsnummer:
**WO 2021/129978 (01.07.2021 Gazette 2021/26)**

(54) **ELEKTROGERÄT MIT ZUMINDEST EINEM HANDGRIFF ZUR SICHEREN FÜHRUNG DES ELEKTROGERÄTS UND VERFAHREN ZUM BETREIBEN DES ELEKTROGERÄTS**

ELECTRICAL TOOL WITH AT LEAST ONE HANDLE FOR SAFE GUIDANCE OF THE ELECTRICAL TOOL AND METHOD FOR OPERATING THE ELECTRICAL TOOL

OUTIL ÉLECTRIQUE AVEC AU MOINS UNE POIGNÉE POUR UN GUIDAGE SÉCURISÉ DE L'OUTIL ÉLECTRIQUE ET PROCÉDÉ DE FONCTIONNEMENT DE L'OUTIL ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.12.2019 DE 102019220568**

(43) Veröffentlichungstag der Anmeldung:
**02.11.2022 Patentblatt 2022/44**

(73) Patentinhaber: **Robert Bosch GmbH**
**70442 Stuttgart (DE)**

(72) Erfinder:
• **KUERSCHNER, Holger**
  **Suffolk IP 14 4RP (GB)**
• **GYURICZA, Arpad**
  **Suffolk IP 145 FT (GB)**
• **JORDAN, Christopher Mark**
  **Suffolk IP14 2RA (GB)**
• **LIBEROPOULOS, Fotis**
  **Suffolk IP145BF (GB)**

(56) Entgegenhaltungen:
EP-A1- 1 440 771    DE-A1- 2 617 460
US-B1- 6 501 281

## Beschreibung

Die Erfindung betrifft ein Elektrogerät mit zumindest einem Handgriff zur sicheren Führung des Elektrogeräts und ein Verfahren zum Betreiben des Elektrogeräts nach der Gattung der unabhängigen Ansprüche.

## Stand der Technik

Viele Elektrogeräte erfordern für Ihre Bedienung und Führung das Einhalten von Sicherheitsmaßnahmen für den Bediener und ggf. weitere Personen. Als Beispiel seien stellvertretend für eine Vielzahl solcher Elektrogeräte handgeführte Rasenmäher genannt, bei denen die Sicherheitsvorschriften derart gestaltet sind, dass sie zur Inbetriebnahme mit mindestens einer Hand am Führungshandgriff gehalten werden müssen und sich sofort automatisch ausschalten, wenn der Handgriff vom Bediener losgelassen wird.

Aus der DE 295 21 118 U1 ist ein elektromotorisch angetriebenes Gartengerät mit einer am Führungsgriff angeordneten Sicherheitsschaltvorrichtung bekannt, wobei ein Totmannschalter nach Einlegen eines Einschalters mit wenigstens einer Hand betätigt und gehalten werden muss, um den Einschalter in der Einschaltstellung zu halten, während der Totmannschalter derart am Führungsgriff angeordnet ist, dass er während des Betriebs des Gartengeräts mit wenigstens einer Hand betätigt, wird bzw. bleibt.

Aus der EP 3 120 684 A1 ist ferner ein elektrischer Rasenmäher bekannt, der über einen Handgriff an seiner Rückseite durch einen Bediener geführt werden kann. Der Rasenmäher umfasst ein Sicherheitssystem, das derart ausgestaltet ist, dass zu einer Inbetriebnahme des Rasenmähers der Handgriff von dem Bediener umfasst sein muss und dass der Rasenmäher sofort ausgeschaltet wird, wenn der Bediener den Handgriff loslässt. Der Handgriff weist dazu ausgehend von seiner Mittenachse in Hauptführungsrichtung des Rasenmähers zwei seitliche Griffbereiche auf, wobei an jedem Griffbereich eine Membran angeordnet ist. Die Membranen sind elektrisch mit einem Schaltmodul verbunden, das seinerseits einen Hauptschalter aufweist, wobei der Hauptschalter auf der Mittenachse des Handgriffs bzw. des Rasenmähers angeordnet ist. Zur Inbetriebnahme des Rasenmähers müssen die Membranen und der Hauptschalter gleichzeitig oder innerhalb eines definierten Zeitfensters vom Bediener betätigt werden. Der Rasenmäher schaltet sich automatisch aus, wenn beide Membranen vom Bediener losgelassen werden.

Die EP 2 447 967 A1 zeigt einen elektrischen Rasenmäher mit einem abnehmbaren Handgriff in Form zweier ausgehend von einer Mittenachse in Hauptführungsrichtung des Rasenmähers abgewinkelter seitlicher Arme, wobei an jedem Arm zwei jeweils quer und parallel zur Mittenachse angeordnete, mechanische Taster vorgesehen sind. Die mechanischen Taster sind elektrisch mit einem vom Handgriff und vom Rasenmäher abnehmbaren Schaltmodul verbunden. Das Schaltmodul ist zudem elektrisch mit einem Hauptschalter verbunden, der auf der Mittenachse des Handgriffs bzw. des Rasenmähers angeordnet ist. Zur Inbetriebnahme des Rasenmähers muss mindestens einer der Taster gedrückt gehalten werden, während der Hauptschalter betätigt wird. Ein Loslassen aller Taster führt zum sofortigen Ausschalten des Rasenmähers.

Die EP 1 440 771 A1 offenbart eine Handwerkzeugmaschine, insbesondere in Gestalt eines Bohrhammers, zum Antrieb eines Werkzeugs mit einem Steuermittel zur Steuerung eines Antriebsmittels sowie mit zumindest einem händisch umfassbaren Handgriff mit zumindest einem, mit dem Steuermittel verbundenen Sensor mit einer manuell betätigbaren ersten Sensorfläche. Ferner ist zumindest eine zweite Sensorfläche vorhanden, wobei beide Sensorflächen innerhalb eines händisch umfassbaren Griffbereiches umfänglich versetzt angeordnet sind. Die paarweise gegenüberliegenden Sensorflächen bilden jeweils mit einem Teil einer integrierten Sensorschaltung zweiumfänglich um 90° versetzte Sensoren, wobei eine Sensorschaltung jeweils einen Schwellwertschalter und einem logischen Ausgang aufweist und die den beiden Sensoren zugeordneten logischen Ausgänge in einem NAND-Schaltkreis miteinander logisch AND verknüpft sind.

Es ist Aufgabe der Erfindung, die aus dem Stand der Technik bekannten Sicherheitsmaßnahmen zur sicheren Führung und/oder Bedienung eines Elektrogeräts mittels eines Handgriffs und eines Sicherheitssystems weiter zu verbessern. Gleichzeitig soll eine Redundanz geschaffen werden, die ohne Reduzierung der Sicherheit ein zuverlässiges Betreiben des Elektrogeräts bei möglichst langer Lebenszeit des Sicherheitssystems ermöglicht.

## Vorteile der Erfindung

Die Erfindung stellt ein Elektrogerät nach dem Anspruch 1 bereit, mit zumindest einem Handgriff zur sicheren Führung des Elektrogeräts durch einen Bediener und mit einem Sicherheitssystem, wobei am Handgriff mindestens zwei voneinander beabstandete Griffbereiche mit jeweils zumindest einem Berührungssensormodul vorgesehen sind. Zur Lösung der gestellten Aufgabe ist erfindungsgemäß vorgesehen, dass jedes Berührungssensormodul zumindest zwei Sensorelektroden aufweist, die jeweils elektrisch mit dem Sicherheitssystem verbunden sind, und dass das Sicherheitssystem derart ausgebildet ist, dass der Bediener zum sicheren Betrieb des Elektrogeräts mindestens eine der ersten und mindestens eine der zweiten Sensorelektroden der Berührungssensormodule mit zumindest einem Körperteil, insbesondere mit einem Teil zumindest einer Hand, berühren muss. Weiterhin ist vorgesehen, dass jeder Sensorelektrode ein Sensor-Prozessor als Analog-Digital-Wandler zur Erzeugung eines digitalen Ausgangssignals, insbesondere eines binären Ausgangssignals, zugeordnet ist, wobei eine Auswertelogik die Ausgangssignale aller ersten Sensorelektroden der Berührungssensormodule zu einem ersten Sensor-Signal und die Ausgangssignale aller zumindest zweiten Sensorelektroden der Berührungssensormodule zu zumindest einem zweiten Sensor-Signal logisch verknüpft. Erfindungsgemäße kann die Sicherheit des redundant ausgelegten Sicherheitssystems dadurch verbessert werden, dass die Ausgangssignale aller ersten Sensorelektroden logisch im Sinne einer Disjunktion (OR) und die aller zumindest zweiten Sensorelektroden logisch im Sinne einer Exklusion (NAND) verknüpft sind. Dabei schaltet die Auswertelogik einen ersten elektrischen Schalter ein, wenn das erste Sensor-Signal einen HIGH-Pegel aufweist, und zumindest einen zweiten elektrischen Schalter ein, wenn das zumindest eine zweite Sensor-Signal einen HIGH-Pegel aufweist, wobei ein Betrieb des Elektrogeräts nur dann möglich ist, wenn der erste und der zumindest eine zweite Schalter eingeschaltet sind.

Durch die Erfindung ist mit besonderem Vorteil eine sehr einfache Handhabung und eine hohe Verschleißunanfälligkeit über eine lange Lebenszeit des Sicherheitssystems des Elektrogeräts gewährleistet. Gleichzeitig ist das Sicherheitssystem derart ausgelegt, dass es ohne Reduzierung der Sicherheit eine Redundanz gegen das Ausfallen einzelner Sensorelektroden bietet. Es kann eine hohe Betriebssicherheit gegen Störungen, beispielsweise gegen hochfrequente Störimpulse, erzielt werden.

Unter einem digitalen Signal soll im Kontext der Erfindung insbesondere ein wertdiskretes Signal verstanden werden. Unter einem binären Signal soll insbesondere ein zweiwertiges Signal (z.B. HIGH und LOW) verstanden werden. Unter dem Berühren einer Sensorelektrode soll insbesondere verstanden werden, dass der Bediener mit einem Körperteil in die Nähe einer Deckschicht der Sensorelektrode kommt, um auf diese Weise eine Kapazitätsänderung zu bewirken. Es ist daher nicht der tatsächliche, physikalische Kontakt der Sensorelektrode durch den Körperteil des Bedieners erforderlich, so dass die Berührungsdetektion z.B. auch mit Handschuhen oder vergleichbaren Textilien und/oder durch Kunststoffoberflächen, wie die der Griffbereiche des Handgriffs, hindurch funktioniert. Die grundsätzliche Funktionsweise einer kapazitiven Berührungsdetektion ist dem Fachmann bekannt, so dass hier nicht näher darauf eingegangen werden soll. Je nach Auslegung der Sensorelektroden kann eine Berührung mit Abständen von bis zu 20 mm zwischen Sensorelektrode und Körperteil detektiert werden, wobei die Sensierungsgenauigkeit und Störunanfälligkeit in der Regel mit größeren Abständen abnimmt.

Weiterhin soll unter der Berührung mindestens eine der ersten und mindestens eine der zweiten Sensorelektroden der Berührungssensormodule verstanden werden, dass entweder mindestens eine erste und eine zweite Sensorelektrode eines einzigen Berührungssensormoduls oder mindestens eine erste Sensorelektrode eines ersten und mindestens eine zweite Sensorelektrode eines weiteren Sensormoduls berührt wird.

Als Elektrogeräte sollen im Kontext der Erfindung beispielsweise handgeführte Gartengeräte, wie Rasenmäher, Rasentrimmer, Astsägen oder dergleichen verstanden werden. Aber auch handgeführte Elektrowerkzeuge zur Bearbeitung von Werkstücken mittels eines elektrisch angetriebenen Einsatzwerkzeugs, bei denen es auf die Sicherheit des Bedieners und/oder anderer Personen ankommt, wie Hand- oder Standbohrmaschinen, Schrauber, Schlagbohrmaschinen, Bohrhämmer, Hobel, Winkelschleifer, Schwingschleifer, Poliermaschinen, Kreis-, Tisch-, Kapp- und Stichsägen oder dergleichen, kommen für die Erfindung in Frage. Weiterhin kann die Erfindung auch auf handgeführte Haushaltgeräte, wie Staubsauger, Mixer, Bügeleisen etc. angewendet werden.

Um einen Verbraucher mit hoher Leistung betreiben zu können, ist ergänzend vorgesehen, dass ein Einschalten des ersten und des zweiten elektrischen Schalters ein Durchschalten zumindest eines weiteren Schalters, insbesondere eines Relais, zur Energieversorgung eines Elektromotors und/oder einer Steueroder Regelelektronik für den Elektromotor des Elektrogeräts bewirkt.

Das Elektrogerät lässt sich besonders sicher führen und/oder betreiben, wenn der Handgriff ausgehend von seiner Mittenachse in Hauptführungsrichtung des Elektrogeräts jeweils zumindest einen Griffbereich mit einem Berührungssensormodul aufweist. Insbesondere größere Elektrogeräte, wie beispielsweise Rasenmäher, sind in vorteilhafterweise Weise mit einen Handgriff ausgestattet, der ausgehend von seiner Mittenachse in Hauptführungsrichtung des Elektrogeräts jeweils einen als angewinkelten Arm ausgebildeten Griffteil mit mindestens zwei Griffbereichen aufweist, wobei in jedem Griffbereich mindestens ein Berührungssensormodul angeordnet ist.

Einen zusätzlichen Schutz gegen elektromagnetische und/oder hochfrequente Störungen bietet eine elektrische Mehrleiterverbindung zwischen den Berührungssensormodulen einerseits und zwischen den Berührungssensormodulen und einer zentralen Schalteinheit andererseits, wobei die Mehrleiterverbindung zwischen einem ersten Leiter und einem zweiten Leiter für die Ausgangs- bzw. Sensorsignale zumindest einen dritter Leiter und ein vierter Leiter für eine Energieversorgung der Berührungssensormodule aufweist. Dabei sind im berührungslosen Zustand des Sicherheitssystems jeweils ein Leiter für die Ausgangssignale und ein Leiter für die Energieversorgung der Berührungssensormodule mit gleichem Spannungspotential nebeneinander angeordnet, so dass es im Falle eines Kurzschlusses zwischen diesen Leitern zu keiner Fehlauslösung des Sicherheitssystems kommen kann.

Die Erfindung betrifft weiterhin ein Verfahren zum sicheren Betreiben eines erfindungsgemäßen Elektrogeräts durch einen Bediener, wobei in einem ersten Schritt der Bediener vor Inbetriebnahme des Elektrogeräts einen elektromechanischen Taster betätigen muss, um das Sicherheitssystem und die Berührungssensormodule des Elektrogeräts mit Energie zu versorgen.

Unter einer Inbetriebnahme des Elektrogeräts soll insbesondere das initiale Versorgen eines Verbrauchers des Elektrogeräts, wie beispielsweise eines Elektromotors und/oder einer Steuer- oder Regelelektronik zur Steuerung oder Regelung des Elektromotors, verstanden werden. Die Inbetriebnahme des Elektrogeräts umfasst daher nicht die Schritte des erfindungsgemäßen Verfahrens, die erst die Inbetriebnahme als solche bewirken, wie z.B. das Betätigen des elektromechanischen Tasters und die Energieversorgung des Sicherheitssystems und der Berührungssensormodule. Im Unterschied zur Inbetriebnahme beschreibt das Betreiben des Elektrogeräts sämtliche Arbeitsvorgänge mit dem Elektrogerät nach dessen Inbetriebnahme und bis zum Abschalten des Elektrogeräts.

In einem nachfolgenden Schritt ist vorgesehen, dass der Bediener mindestens eine der ersten und mindestens eine der zweiten Sensorelektroden der Berührungssensormodule zur Inbetriebnahme des Elektrogeräts berühren muss, damit ein Elektromotor und/oder eine Steuer- oder Regelelektronik für den Elektromotor des Elektrogeräts mit elektrischer Energie versorgt wird. Nach dem Loslassen des elektromechanischen Tasters wird in einem nachfolgenden Schritt ein Timer gestartet, nach dessen Ablauf eine definierte Zeitspanne beendet ist. Um das Elektrogerät in Betrieb zu nehmen, muss der Bediener mindestens eine der ersten und mindestens eine der zweiten Sensorelektroden der Berührungssensormodule in weiteren Schritten entweder innerhalb der definierten Zeitspanne nach dem Loslassen des elektromechanischen Tasters oder während des Gedrückthaltens des mechanischen Tasters berühren.

Zur Gewährung der erforderlichen Sicherheit wird in einem letzten Schritt des erfindungsgemäßen Verfahrens das Elektrogerät beim Loslassen sämtlicher Berührungssensormodule durch den Bediener abgeschaltet.

**Ausführungsbeispiele**

**Zeichnung**

Die Erfindung wird im Folgenden anhand der Figuren 1 bis 14 beispielhaft erläutert, wobei gleiche Bezugszeichen in den Figuren auf gleiche Bestandteile mit einer gleichen Funktionsweise hindeuten.

Es zeigen

Fig. 1:     eine perspektivische Ansicht eines Elektrogeräts in Form eines elektromotorisch angetriebenen Rasenmähers,

Fig. 2:     eine perspektivische Ansicht eines Handgriffs des elektromotorisch angetriebenen Rasenmähers gemäß Figur 1 zur sicheren Führung des Rasenmähers durch einen Bediener,

Fig. 3:     ein Schaltbild eines ersten Ausführungsbeispiels der Schaltungstopologie eines im Handgriff des Rasenmähers gemäß Figur 2 angeordneten erfindungsgemäßen Sicherheitssystems,

Fig. 4:     ein Blockschaltbild eines Ausführungsbeispiels einer zentralen Schalteinheit des erfindungsgemäßen Sicherheitssystems gemäß Figur 3,

Fig. 5:     eine Wertetabelle der Ausgangssignale der Sensorelektroden und der resultierenden Sensor-Signale der Berührungssensormodule des erfindungsgemäßen Sicherheitssystems gemäß der Figuren 3 und 4,

Fig. 6:     ein Flussdiagramm eines erfindungsgemäßen Verfahrens zum Betreiben des Elektrogeräts durch einen Bediener,

Fig. 7:     ein Zeitdiagramm zur erfindungsgemäße Inbetriebnahme des Elektrogeräts,

Fig. 8:     eine perspektivische Ansicht des Aufbaus des erfindungsgemäßen Berührungssensormoduls in einem ersten Ausführungsbeispiel (Figur 8a) und eine entsprechende Schnittansicht des Aufbaus (Figur 8b),

Fig. 9:     eine Tabelle möglicher Breiten- und Abstandsverhältnisse der Sensorelektroden und einer mittigen Masseleiterbahn des erfindungsgemäßen Berührungssensormoduls,

Fig. 10:     eine Schnittansicht des Aufbaus des erfindungsgemäßen Berührungssensormoduls in einem zweiten Ausführungsbeispiel,

Fig. 11:     perspektivische Ansichten des Aufbaus des erfindungsgemäßen Berührungssensormoduls in einem dritten Ausführungsbeispiel von einer ersten Seite (Figur 11a) und von einer zweiten Seite (Figur 11b),

Fig. 12:     ein Schaltbild eines zweiten Ausführungsbeispiels der Schaltungstopologie des erfindungsgemäßen Sicherheitssystems im Handgriff des Elektrogeräts,

Fig. 13:     ein Schaltbild eines dritten Ausführungsbeispiels der Schaltungstopologie des erfindungsgemäßen Sicherheitssystems im Handgriff des Elektrogeräts und

Fig. 14: ein Schaltbild eines vierten Ausführungsbeispiels der Schaltungstopologie des erfindungsgemäßen Sicherheitssystems im Handgriff des Elektrogeräts.

**Beschreibung der Ausführungsbeispiele**

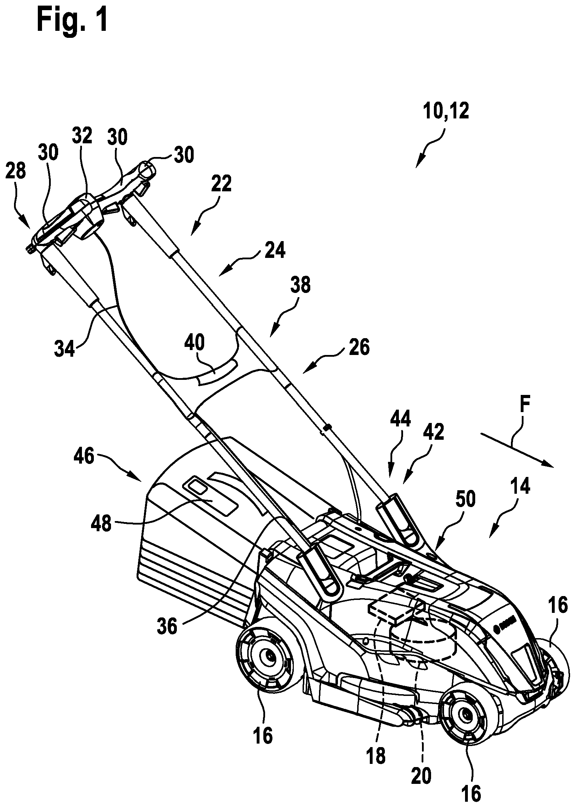

In Figur 1 ist eine perspektivische Ansicht eines Elektrogeräts 10 in Form eines elektromotorisch angetriebenen Rasenmähers 12 dargestellt. Der Rasenmäher 12 bzw. das Elektrogerät 10 kann sowohl über ein Stromnetz als auch über integrierte Akkus bzw. Akkupacks oder Wechselakkupacks mit Energie versorgt werden. Da die Art der Energieversorgung für die Erfindung von untergeordneter Bedeutung ist, soll hierauf nicht näher eingegangen werden. Der Fachmann wird entsprechend geeignete Vorrichtungen zur Energieversorgung einsetzen.

Wie eingangs bereits erwähnt, soll im Kontext der Erfindung nicht nur der nachfolgend beschriebene Rasenmäher 12 als Elektrogerät 10 verstanden werden, sondern auch ein anderes handgeführtes Gartengerät, wie zum Beispiel ein Rasentrimmer, eine Astsäge oder dergleichen. Auch ein handgeführtes Elektrowerkzeug zur Bearbeitung von Werkstücken mittels eines elektrisch angetriebenen Einsatzwerkzeugs, bei dem es auf die Sicherheit des Bedieners und/oder anderer Personen ankommt, wie beispielsweise ein Hand- oder Standbohrmaschine, ein Schrauber, eine Schlagbohrmaschine, ein Bohrhammer, ein Hobel, ein Winkelschleifer, ein Schwingschleifer, eine Poliermaschine, eine Kreis-, Tisch-, Kapp- oder Stichsäge oder dergleichen kommt für die Erfindung in Frage. Weiterhin kann die Erfindung auch auf ein handgeführtes Haushaltgerät, wie ein Staubsauger, ein Mixer, ein Bügeleisen etc. angewendet werden.

Der Rasenmäher 12 umfasst ein Gehäuse 14, in dem ein Fahrgestell und ein Mähwerk aufgenommen sind. Das nicht näher dargestellte Mähwerk umfasst seinerseits Schneideelemente, die beim Betrieb des Rasenmähers 12 zum Schneiden von Schneidgut, insbesondere Gras, dienen. Mit dem ebenfalls nicht näher dargestellten Fahrgestell des Rasenmähers 12 sind vier Räder 16 verbunden. Über die Energieversorgung des Rasenmähers 12 wird zumindest eine Steuer- oder Regelelektronik 18 und ein Elektromotor 20 mit Energie versorgt. Die Steuer- oder Regelelektronik 18 ist primär zur Steuerung oder Regelung des Rasenmähers 12, insbesondere zur Steuerung oder Regelung des Elektromotors 20 des Rasenmähers 12, ausgebildet. Über den Elektromotor 20 wird das Mähwerk, insbesondere die Schneideelemente des Mähwerks, angetrieben.

Das Gehäuse 14 ist mit einer Führungsvorrichtung 22 verbunden, über die der Rasenmäher 12 mit zumindest einer Hand des Bedieners führbar und bedienbar ist. Die Führungsvorrichtung 22 weist zwei Führungsglieder 24, 26 auf, die teleskopartig ineinander geführt sind. Das erste Führungsglied 24 umfasst einen Handgriff 28 mit vier Griffbereichen 30 zur sicheren Führung und Bedienung des Rasenmähers 12. Der Handgriff 28 weist ferner eine zentrale Schalteinheit 32 auf, die elektrisch mit der Steuer- oder Regelelektronik 18 des Rasenmähers 12 verbunden ist. Die Verbindung erfolgt beispielhaft über eine Kabelverbindung 34, die im Gehäuse 14 befestigt und über einen Spalt 36 des Gehäuses 14 nach außen geführt ist; es ist allerdings auch denkbar, dass die Verbindung zwischen der zentralen Schalteinheit 32 und der Steuer- oder Regelelektronik 18 drahtlos erfolgt. An einem Ende der Kabelverbindung 34 ist diese elektrisch und mechanisch lösbar am Handgriff 28 befestigt. Im verbundenen Zustand kann durch ein Auslösen der zentralen Schalteinheit 32 der Elektromotor 20 über die Steuer- oder Regelelektronik 18 gesteuert, insbesondere ein- und ausgeschaltet, werden. Ergänzend ist denkbar, dass die Schalteinheit 32 mittels der Steuer- oder Regelelektronik 18 die Drehzahl des Elektromotors 20 steuert oder regelt.

Die beiden Führungsglieder 24, 26 der Führungsvorrichtung 22 sind lösbar miteinander verbunden. Das erste Führungsglied 24 weist eine Fixiereinheit 38 zur lösbaren Fixierung am zweiten Führungsglied 26 mittels einer Bedienenheit 40 auf. Das zweite Führungsglied 26 umfasst eine Schwenkeinheit 42, über die die Führungsvorrichtung 22 schwenkbar mit dem Gehäuse 14 des Rasenmähers 12 verbunden ist. Mit Hilfe einer Sicherung 44 der Schwenkeinheit 42 wird in einem unbetätigten Zustand ein Schwenken der Führungsvorrichtung 22 gegenüber dem Gehäuse 14 verhindert.

Am Gehäuse 14 des Rasenmähers 12 ist ein Auffangbehälter 46 für das Schneidgut lösbar einhängbar. Der Auffangbehälter 46 ist insbesondere faltbar ausgebildet, sodass er geleert und im gefalteten Zustand platzsparend gelagert werden kann. Des Weiteren weist der Auffangbehälter 46 eine Anzeigevorrichtung 48 auf, über die ein Füllstand des Auffangbehälters 46 anzeigbar ist. Weiterhin umfasst der Rasenmäher 12 eine Stellvorrichtung 50 zur Einstellung einer Schnitthöhe des Rasenmäher 12. Vorteilhaft kann über die Stellvorrichtung 50 der Abstand zwischen den Rädern 16 und dem Mähwerk eingestellt werden.

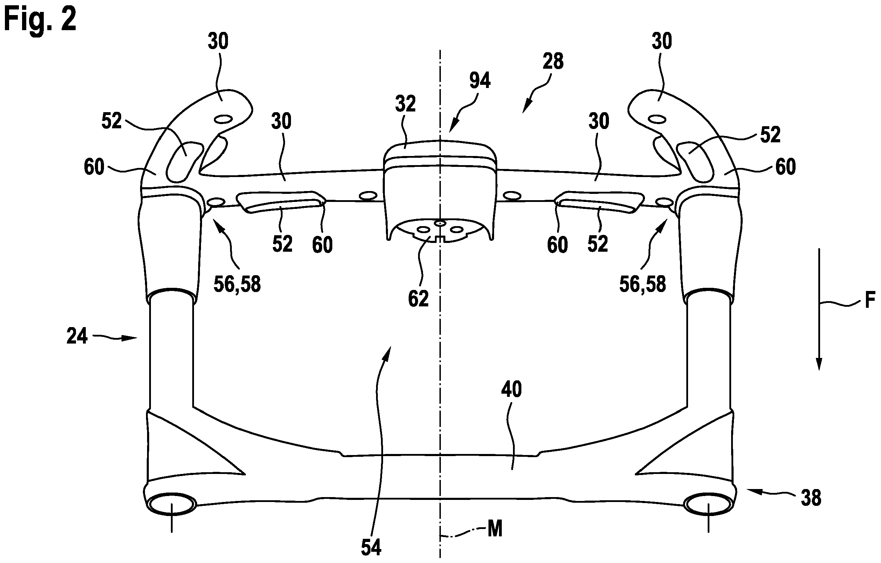

In Figur 2 ist der Handgriff 28 des Rasenmähers 12 im Detail gezeigt. Am Handgriff 28 sind vier voneinander beabstandete Griffbereiche 30 mit jeweils zumindest einem Berührungssensormodul 52 eines Sicherheitssystem 54 vorgesehen. Ausgehend von seiner Mittenachse M weist der Handgriff 28 in Hauptführungsrichtung F des Rasenmähers 12 jeweils einen als angewinkelten Arm 56 ausgebildeten Griffteil 58 mit jeweils zwei Griffbereichen 30 auf, wobei in jedem Griffbereich 30 ein Berührungssensormodul 52 angeordnet ist. Zur besseren haptischen Erkennbarkeit sind die Berührungssensormodule 52 hinter entsprechenden Vorsprüngen 60 der Griffbereiche 30 vorgesehen. Es ist aber ebenso denkbar, dass die Berührungssensormodule 52 bündig in die Griffbereiche 30 eingelassen sind.

In etwa mittig im Handgriff 28 ist die zentrale Schalteinheit 32 angeordnet, die elektrisch über eine Schnittstelle 62 des Handgriffs 28 und die daran anschließbare Kabelverbindung 34 mit der in Figur 1 gezeigten Steuer- oder Regelelektronik 18 des Rasenmähers 12 verbindbar ist. Der Handgriff 28 kann zusammen mit dem ersten Führungsglied 24 und der Fixiereinheit 38 lösbar am zweiten Führungsglied 26 des Rasenmähers 12 fixiert werden. Bei Verwendung einer Funkverbindung zwischen der zentralen Schalteinheit 32 und der Steuer- oder Regelelektronik 18 des Rasenmähers 12 kann auf die Schnittstelle 62 für die Kabelverbindung 34 verzichtet werden.

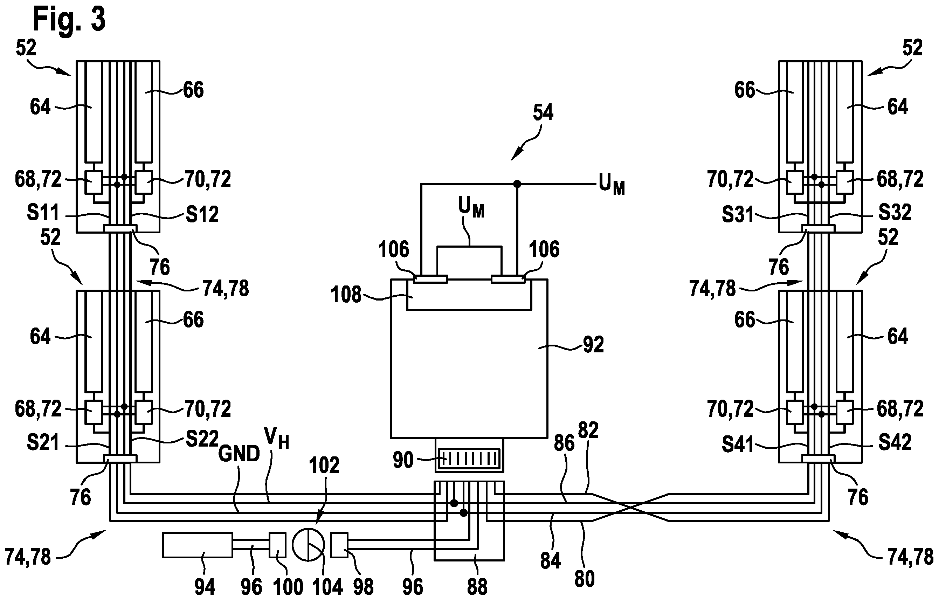

Figur 3 zeigt ein Schaltbild eines ersten Ausführungsbeispiels der Schaltungstopologie eines im Handgriff 28 des Rasenmähers 12 angeordneten Sicherheitssystems 54. Erfindungsgemäß ist vorgesehen, dass jedes Berührungssensormodul 52 als eine Leiterplatte mit einer ersten Sensorelektrode 64 und zumindest einer zweiten Sensorelektrode 66 ausgebildet ist, die jeweils elektrisch mit dem Sicherheitssystem 54 verbunden sind. Zum sicheren Betrieb des Rasenmähers 12 muss der Bediener jeweils zumindest eine erste und eine zweite Sensorelektrode 64, 66 der Berührungssensormodule 52 mit zumindest einem Körperteil, insbesondere mit einem Teil zumindest einer Hand, berühren. Jede Sensorelektrode 64, 66 eines Berührungssensormoduls 52 ist mit einem auf die Leiterplatte gelöteten Sensor-Prozessor 68, 70 elektrisch verbunden, der als Analog-Digital-Wandler 72 das analoge Sensorsignal einer Sensorelektrode 64, 66 in ein digitales Ausgangssignal $S11$, $S12$, $S21$, $S22$, $S31$, $S32$, $S41$, $S42$ wandelt. Die mindestens zwei Sensorelektroden 64, 66 und zwei Sensor-Prozessoren 68, 70 in jedem Berührungssensormodul 52 bewirken eine höhere Sicherheit infolge der erzielten Redundanz des Sicherheitssystems 54. Bevorzugt sind die digitalen Ausgangssignale $S11$, $S12$, $S21$, $S22$, $S31$, $S32$, $S41$, $S42$ binär codiert, so dass sie lediglich einen HIGH- und einen LOW-Pegel aufweisen, wobei den ersten Ausgangssignalen $S11$, $S21$, $S31$, $S41$ im Falle einer Berührung mindestens einer der ersten Sensorelektroden 64 durch den Bediener ein HIGH-Pegel (Active HIGH) und den zweiten Ausgangssignalen $S12$, $S22$, $S32$, $S42$ im Falle einer Berührung mindestens einer der zweiten Sensorelektroden 64 durch den Bediener ein LOW-Pegel (Active LOW) zugeordnet wird.

Zum Anschluss einer elektrischen Mehrleiterverbindung 74 an das Berührungssensormodul 52 ist eine vierpolige Schnittstelle 76 vorgesehen. Die Schnittstelle 76 ist an der Mehrleiterverbindung 74 bevorzugt als eine Schneidklemmverbindung ausgeführt, um die Herstellung einerseits kostengünstig und einfach zu gestalten und andererseits die Zuverlässigkeit gegenüber einer Lötverbindung zu verbessern. Seitens des Berührungssensormoduls 52 ist die Schnittstelle 76 dagegen auf die Leiterplatte gelötet. Die Mehrleiterverbindung 74 ist bevorzugt als eine Mehrzahl vieradriger Flachbandkabel 78 zwischen den Berührungssensormodulen 52 ausgebildet, wobei zwischen einem ersten Leiter 80 für die Ausgangssignale $S11$, $S21$, $S31$, $S41$ der ersten Sensor-Prozessoren 68 und einem zweiten Leiter 82 für die Ausgangssignale $S12$, $S22$, $S32$, $S42$ der zweiten Sensor-Prozessoren 70 jedes Flachbandkabels 78 ein dritter Leiter 84 und ein vierter Leiter 86 für die Energieversorgung der Berührungssensormodule 52 bzw. der Sensor-Prozessoren 68 angeordnet ist. Dabei dient der dritte Leiter 84 als Masseverbindung GND und der vierte Leiter 86 zur Übertragung eines Versorgungspotentials $V_H$ von vorzugsweise 5 V. Die Anordnung der beiden Leiter 84, 86 zur Energieversorgung zwischen den beiden Leitern 80, 82 zur Datenübertragung bewirkt mit besonderem Vorteil eine höhere Unempfindlichkeit der Mehrleiterverbindung 74 gegenüber elektromagnetischen oder hochfrequenten Störungen, die zu einer Fehldetektion der Ausgangssignal-Pegel führen könnte. Zudem ist durch die besondere Reihenfolge der Leiter 80 (Active HIGH), 84 (GND), 86 ($V_H$) und 82 (Active LOW) sichergestellt, dass es im Falle eines Kurzschlusses zwischen zwei benachbarten Daten- und Energieversorgungsleitern 80, 84 bzw. 86, 82 zu keiner Fehlauslösung des Sicherheitssystems 54 kommt, da im berührungslosen Zustand des Sicherheitssystems (54) keine Spannungsdifferenz zwischen diesen Leitern existiert.

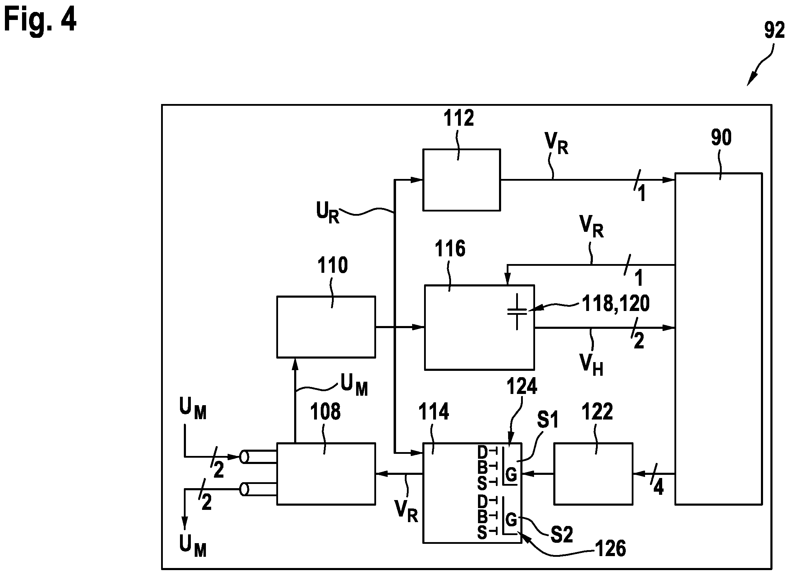

Die vier Leiter 80, 82, 84, 86 eines mit dem Berührungssensormodul 52 verbundenen Flachbandkabels 78 sind in jedem Berührungssensormodul 52 durchgeschleift, so dass mehrere Berührungssensormodule 52 sehr einfach hintereinandergeschaltet werden können. Elektrotechnisch betrachtet bewirkt das Durchschleifen der Leiter 80, 82, 84, 86 in jedem Berührungssensormodul 52 eine Parallelschaltung der auf diese Weise verbundenen Berührungssensormodule 52. Je Arm 56 des Handgriffs 28 ergibt sich so ein Flachbandkabel 78, das mit einem zentralen Anschlussstecker 88 verbunden ist. Auch der Anschlussstecker 88 ist analog den Schnittstellen 74 der Berührungssensormodule 52 vorzugsweise über eine Schneidklemmverbindung mit den insgesamt acht Leitern 80, 82, 84, 86 beider Flachbandkabel 78 verbunden. Weiterhin ist der Anschlussstecker 88 lösbar mit einem Anschlussterminal 90 einer zentralen Schalteinheit 92 des Sicherheitssystems 54 verbindbar, so dass ggf. ein schneller Austausch der zentralen Schalteinheit 92 möglich ist. Die zentrale Schalteinheit 92 soll nachfolgend mit Bezug auf Figur 4 näher beschrieben werden.

Neben den Berührungssensormodulen 52 weist das Sicherheitssystem 54 einen elektromechanischen Taster 94 auf, der betätigt werden muss, um das Sicherheitssystem 54 und die Berührungssensormodule 52 für eine definierte Zeitspanne T mit Energie zu versorgen. Der elektromechanische Taster 94 ist bevorzugt derart im Handgriff 28 auf der Mittenachse M angeordnet, dass der Bediener ihn hinter dem Rasenmäher 12 stehend leicht betätigen kann (vgl. Figur 2). Weiterhin ist der elektromechanische Taster 94 über eine Kabelverbindung 96 sowie einen zweipoligen Stecker 98 und eine entsprechende zweipolige Buchse 100 lösbar mit dem Anschlussstecker 88 verbunden. Zu diesem Zweck weist der Handgriff 38 eine Öffnung 102 mit einem mittig angeordneten Steg 104 auf, wobei die Öffnung 102 und der Steg 104 so gewählt sind, dass entweder nur der Stecker 98 oder nur die Buchse 100 hindurch passt.

In Figur 4 ist ein Blockschaltbild eines Ausführungsbeispiels der zentralen Schalteinheit 92 des Sicherheitssystems 54 dargestellt. Die Schalteinheit 92 ist als Leiterplatte mit aufgelötetem Anschlussterminal 90 ausgebildet. Das Anschlussterminal 90 weist insgesamt acht elektrische Kontakte zur lösbaren Verbindung mit dem zentralen Anschlussstecker 88 gemäß Figur 3 auf.

Im Falle eines netzbetriebenen Rasenmähers 12 wird die zentrale Schalteinheit 92 mit einer Versorgungsspannung $U_M$ von 230 V versorgt. Bei einen akkubetriebenen Rasenmäher 12 ist die Versorgungsspannung $U_M$ entsprechend geringer, z.B. 36 V oder 72 V. Die Versorgungsspannung $U_M$ liegt an einer aus zwei Relais 106 bestehenden Relaiseinheit 108 an. Die Relais 106 sind im unbestromten Zustand geöffnet; im bestromten Zustand schließen die Relais 106, so dass die an ihnen anliegende Versorgungsspannung $U_M$ an die Steuer- oder Regelelektronik 18 bzw. den Elektromotor 20 des Rasenmähers 12 durchgeschaltet wird. Die beiden Relais 106 arbeiten parallel und sind daher redundant in dem Sicherheitssystem 54 ausgeführt.

Die Versorgungsspannung $U_M$ wird von der Relaiseinheit 108 unabhängig vom Schaltzustand der beiden Relais 106 an einen Gleichspannungswandler 110 weitergeleitet. Dieser stellt sekundärseitig eine Gleichspannung $U_R$ von 12 V bereit, die einerseits über eine optionale Spannungsaufbereitung 112 am Anschlussterminal 90 als Schaltpotential $V_R$ für den elektromechanischen Taster 94 anliegt und andererseits zur Versorgung eines Relaistreibers 114 dient. Zudem wird die Gleichspannung $U_R$ mittels einer nachgeschalteten Wandlerelektronik 116 in das Versorgungspotential $V_H$ von 5 V zur Versorgung der Berührungssensormodule 52 über das Anschlussterminal 90 gewandelt.

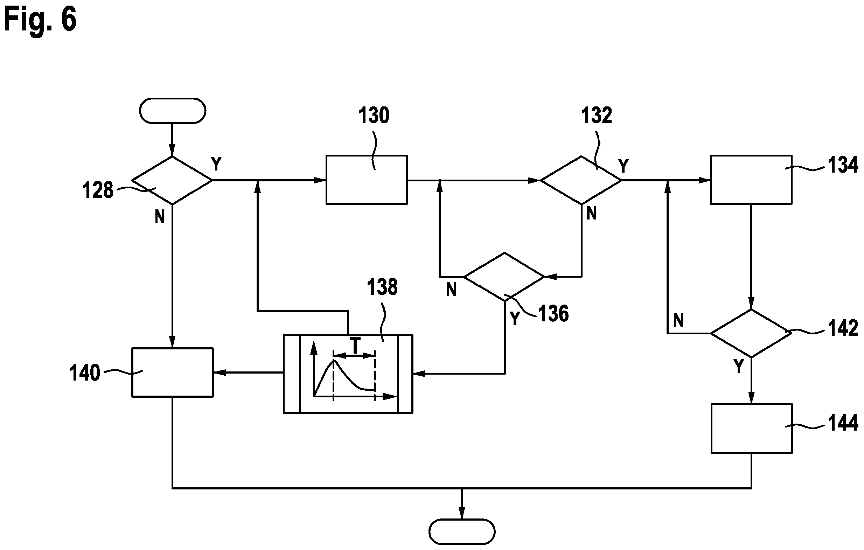

Durch das Loslassen des elektromechanischen Tasters 94 wird ein Timer 118 der Wandlerelektronik 116 gestartet, wobei der Timer 118 beispielsweise als ein Kondensator 120 eines nicht näher gezeigten RC-Glieds ausgebildet sein kann. Der Kondensator 120 wird unmittelbar mit dem Betätigen des elektromechanischen Tasters 94 aufgeladen und entlädt sich wieder nach dem Loslassen des elektromechanischen Tasters 94. Der Entladevorgang definiert somit eine Zeitspanne T (vgl. Figur 6), innerhalb der der Bediener zur Inbetriebnahme des Rasenmähers 12 mindestens eine der ersten und mindestens einer der zweiten Sensorelektroden 64, 66 der Berührungssensormodule 52 des Handgriffs 28 berührt haben muss. Der Timer 118 kann auch durch einen Prozessor der Wandlerelektronik 116 oder dergleichen realisiert sein.

Weiterhin umfasst die zentrale Schalteinheit 92 eine Auswertelogik 122 für die binären Ausgangsignale S11, S12, S21, S22, S31, S32, S41, S42 der acht Sensor-Prozessoren 68, 70 der vier Berührungssensormodule 52. Dabei werden die Ausgangssignale S11, S21, S31, S41 aller ersten Sensorelektroden 64 der Berührungssensormodule 52 zu einem ersten Sensor-Signal S1 und die Ausgangssignale S12, S22, S32, S42 aller zweiten Sensorelektroden 66 der Berührungssensormodule 52 zu einem zweiten Sensor-Signal S2 jeweils logisch verknüpft. Da eine Berührung einer der ersten Sensorelektroden 64 der Berührungssensormodule 52 zu einen HIGH-Pegel der betreffenden Ausgangssignale S11, S21, S31, S41 (Active HIGH) und eine Berührung einer der zweiten Sensorelektroden 66 der Berührungssensormodule 52 zu einem LOW-Pegel der betreffenden Ausgangssignale S12, S22, S32, S42 (Active LOW) führt, sind die Ausgangssignale S11, S21, S31, S41 aller ersten Sensorelektroden 64 logisch im Sinne einer Disjunktion (OR) und die Ausgangssignale S12, S22, S32, S42 aller zweiten Sensorelektroden 66 logisch im Sinne einer Exklusion (NAND) verknüpft.

$$S1 = S11 \lor S21 \lor S31 \lor S41$$

$$S2 = \lnot\, (S12 \land S22 \land S32 \land S42)$$

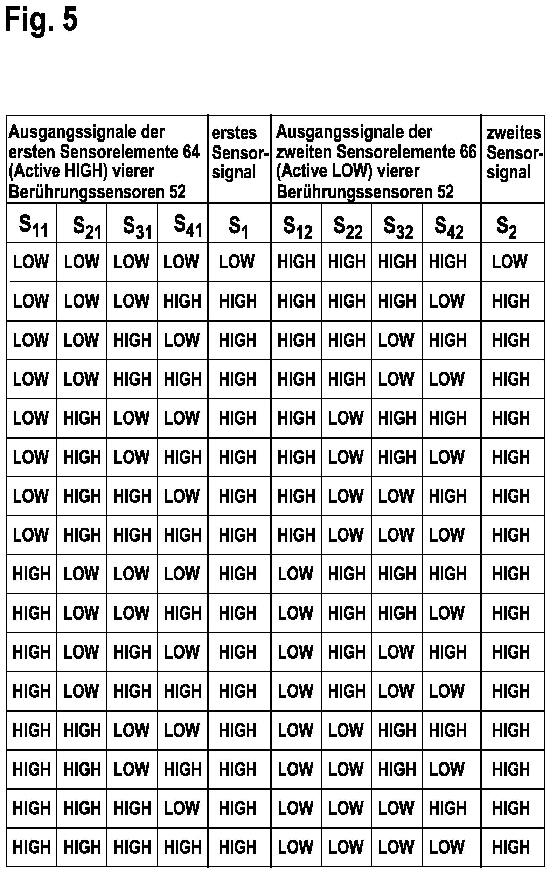

In Figur 5 ist für die obige Schaltlogik eine Wertetabelle der Ausgangssignale S11, S21, S31, S41 aller ersten Sensorelektroden 64 (Active HIGH) und der Ausgangssignale S12, S22, S32, S42 aller zweiten Sensorelektroden 66 (Active LOW) sowie der resultierenden Sensor-Signale $S_1$ und $S_2$ der Berührungssensormodule 52 des erfindungsgemäßen Sicherheitssystems 54 dargestellt.

Die Auswertelogik 122 schaltet einen ersten elektrischen Schalter 124 bzw. einen zweiten elektrischen Schalter 126 des Relais-Treibers 114 ein, wenn das erste Sensor-Signal S1 bzw. das zweite Sensor-Signal S2 einen HIGH-Pegel aufweist. Die beiden Schalter 124, 126 des Relais-Treibers 114 sind bevorzugt als Halbleiterschalter, beispielsweise als MOSFET, ausgebildet. Sie sind in Reihe geschaltet, so dass die beiden Relais 106 der Relaiseinheit 108 nur bestromt werden, wenn beide Schalter 124, 126 eingeschaltet sind. Dies entspricht einer logischen Konjunktion (UND-Verknüpfung) der beiden Sensor-Signale und S2.

$$S1 \land S2$$

Ein Betrieb des Rasenmähers 12 ist somit nur dann möglich, wenn der erste und der zweite Schalter 124, 126 eingeschaltet sind, um die Relais 106 zur Versorgung der Steuer- oder Regelelektronik 18 bzw. des Elektromotors 20 des Rasenmähers 12 zu bestromen.

Figur 6 zeigt ein Flussdiagramm des erfindungsgemäßen Verfahrens zum Betreiben des Elektrogeräts 10 bzw. des Rasenmähers 12 durch einen Bediener. In einem ersten Schritt 128 des Verfahrens betätigt der Bediener vor Inbetriebnahme des Rasenmähers 12 und nach Vorliegen der Versorgungsspannung $U_M$ den elektromechanischen Taster 94, um das Sicherheitssystem 54 und die Berührungssensormodule 52 mit Energie zu versorgen (Schritt 130). In einem nachfolgenden Schritt 132 muss der Bediener dann jeweils mindestens eine der ersten und mindestens eine der zweiten Sensorelektroden 64, 66 der Berührungssensormodule 52 berührt haben, um die Inbetriebnahme des Rasenmähers 12 zu bewirken. Dabei wird die Steuer- oder Regelelektronik 18 und/oder der Elektromotor 20 des Rasenmähers 12 über die Relais 106 in der zuvor beschriebenen Weise mit elektrischer Energie versorgt (Schritt 134).

Lässt der Bediener den elektromechanischen Taster 94 in Schritt 136 los, bevor er mindestens eine der ersten und mindestens eine der zweiten Sensorelektroden 64, 66 der Berührungssensormodule 52 berührt hat, beginnt die definierte Zeitspanne T des Timers 118 (Schritt 138), innerhalb der er zur Inbetriebnahme des Rasenmähers 12 noch Gelegenheit hat, jeweils mindestens eine der ersten und mindestens eine der zweiten Sensorelektroden 64, 66 der Berührungssensormodule 52 zu berühren. Erfolgt keine Berührung innerhalb der definierten Zeitspanne T, wird die Energieversorgung des Sicherheitssystems 54 und der Berührungssensormodule 52 wieder unterbrochen (Schritt 140) und das Verfahren startet von vorne.

Werden während des Betriebs des Rasenmähers 12 in Schritt 142 sämtliche Sensorelektroden 64, 66 losgelassen, so schaltet sich der Rasenmäher 12 bzw. dessen Steuer- oder Regelelektronik 18 und der Elektromotor 20 mittels der Relais-Stufe 108 aus (Schritt 144). Auch damit beginnt das Verfahren wieder von Neuem.

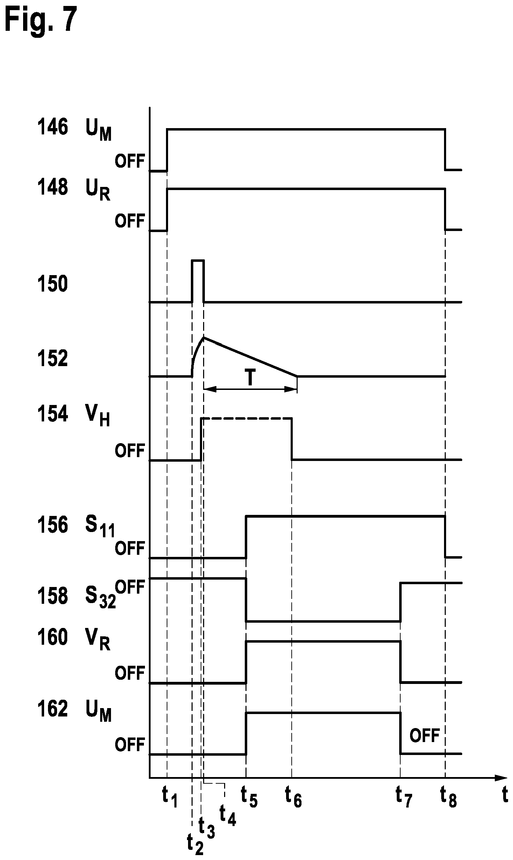

Figur 7 zeigt ein Zeitdiagramm zur erfindungsgemäßen Inbetriebnahme des Rasenmähers 12 mit Bezug auf das in Figur 6 beschriebene Verfahren. Gemäß den Zeitverläufen in den Teildiagrammen 146 und 148 wird der Rasenmäher 12 zu einem ersten Zeitpunkt $t_1$ an das Stromnetz angeschlossen, so dass die Versorgungsspannung $U_M$ von z.B. 230 V anliegt. Alternativ ist ebenso denkbar, dass der Rasenmäher 12 mit einem Wechselakkupack versorgt wird, wobei die Versorgungsspannung $U_M$ dann beispielsweise 36 V oder 72 V beträgt. Zeitgleich mit der Versorgungsspannung $U_M$ wird über den Gleichspannungswandler 110 auch die Gleichspannung $U_R$ bereitgestellt. Zu einem zweiten Zeitpunkt $t_2$ betätigt der Bediener den elektromechanischen Taster 94 gemäß Teildiagramm 150 für mindestens 100 ms (vgl. Schritt 128 in Figur 6). Dadurch wird gemäß Teildiagramm 152 der Kondensator 120 der Wandlerelektronik 116 aufgeladen. Kurze Zeit ($t_3 - t_2 < 100$ ms) nach dem Betätigen des elektromechanischen Tasters 94 werden das Sicherheitssystem 54 und die Berührungssensormodule 52 gemäß Teildiagramm 154 mit dem Versorgungspotential $V_H$ von 5 V versorgt (vgl. Schritt 130 in Figur 6). Damit ist das Sicherheitssystem 54 für die Inbetriebnahme des Rasenmähers 12 aktiviert.

Nach dem Loslassen des elektromechanischen Tasters 94 durch den Bediener zum Zeitpunkt $t_4$ (vgl. Schritt 136 in Figur 6) entlädt sich der Kondensator 120 wieder bis zum Ablauf der definierten Zeitspanne T von ca. einer Sekunde (Zeitpunkt $t_6$). Innerhalb der definierten Zeitspanne T muss der Bediener nun mindestens eine der ersten und mindestens eine der zweiten Sensorelektroden 64, 66 der Berührungssensormodule 52 des Handgriffs 28 berührt haben, um den Rasenmäher 12 zu starten (vgl. Schritt 138 in Figur 6). Dies geschieht zum Zeitpunkt $t_5$ gemäß der Teildiagramme 156 und 158. Dabei zeigt das Teildiagramm 156 exemplarisch den Zeitverlauf des "Active-HIGH"-Ausgangssignals S11 der ersten Sensorelektrode 64 des ersten Berührungssensormoduls 52 und das Teildiagramm 158 den Zeitverlauf des "Active-LOW"-Ausgangssignals $S_{32}$ der zweiten Sensorelektrode 66 des dritten Berührungssensormoduls 52. Beide Sensorelektroden 64, 66 werden durch den Bediener bis zum Zeitpunkt $t_7$ berührt. Gleichzeitig mit dem Berühren beider Sensorelektroden 64, 66 zum Zeitpunkt $t_5$ wird an die beiden Relais 106 mittels der MOSFETs 124, 126 des Relais-Treibers 114 gemäß Teildiagramm 160 das Schaltpotential $V_R$ angelegt. Durch das Bestromen schalten die Relais 106 durch, so dass an der Steuer- oder Regelelektronik 18 und am Elektromotor 20 die Versorgungsspannung $U_M$ anliegt (vgl. Schritt 134 in Figur 6). Damit wird der Rasenmäher 12 in Betrieb genommen.

Lässt der Bediener des Rasenmähers 12 gemäß den Teildiagrammen 156 und 158 beide Berührungssensormodule 52 und damit auch beide Sensorelektroden 64, 66 zum Zeitpunkt $t_7$ los (beispielsweise, weil er seine Arbeit beendet hat oder weil er gestürzt ist), so nehmen das Ausgangssignal $S_{11}$ einen LOW-Pegel und das Ausgangssignal $S_{32}$ einen HIGH-Pegel an. Da keine Sensorelektrode 64, 66 des Handgriffs 28 mehr berührt wird, nehmen die Sensor-Signale $S_1$ und $S_2$ gemäß der obigen Logik jeweils einen LOW-Pegel an. Dadurch werden zeitgleich die beiden Relais 106 über die MOSFETs 124, 126 geöffnet und der Rasenmäher 12 ausgeschaltet (vgl. Schritt 144 in Figur 6). Zum Zeitpunkt $t_8$ wird der Rasenmäher 12 beispielsweise durch Ziehen eines Netzsteckers von der Versorgungsspannung $U_M$ getrennt. Im Falle eines akkubetriebenen Elektrogeräts 10 kann das Anlegen der Versorgungsspannung $U_M$ zum Zeitpunkt $t_1$ und das Trennen von der Versorgungsspannung $U_M$ zum Zeitpunkt $t_8$ beispielsweise auch über einen Beschleunigungssensor oder dergleichen realisiert werden, so dass das Elektrogerät 10 im Ruhezustand nur einen sehr geringen Ruhestrom verbraucht.

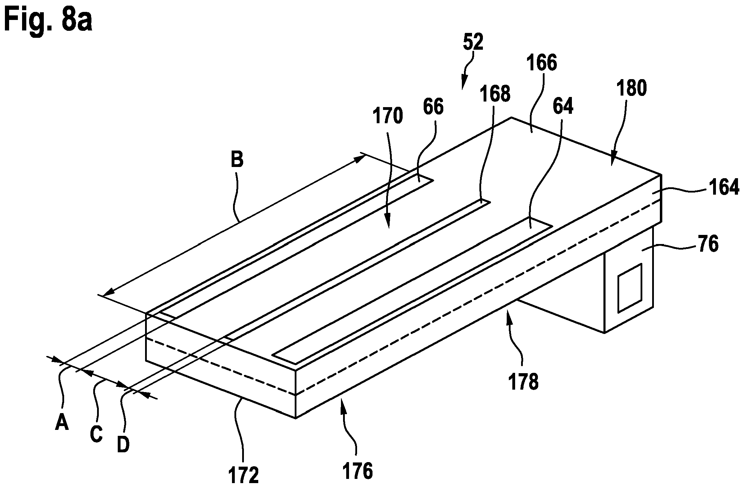

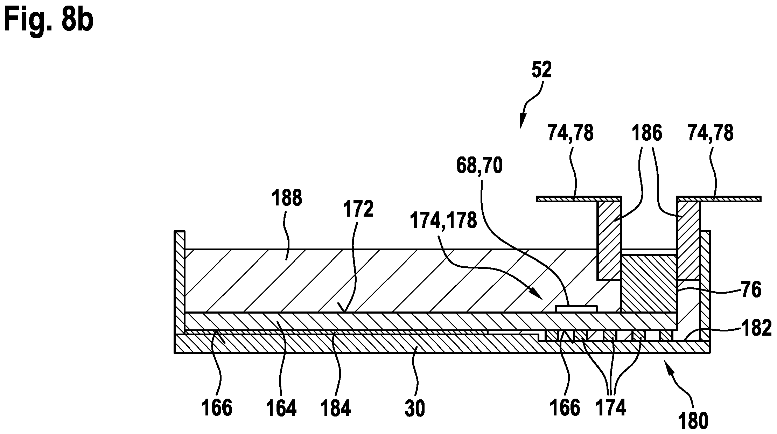

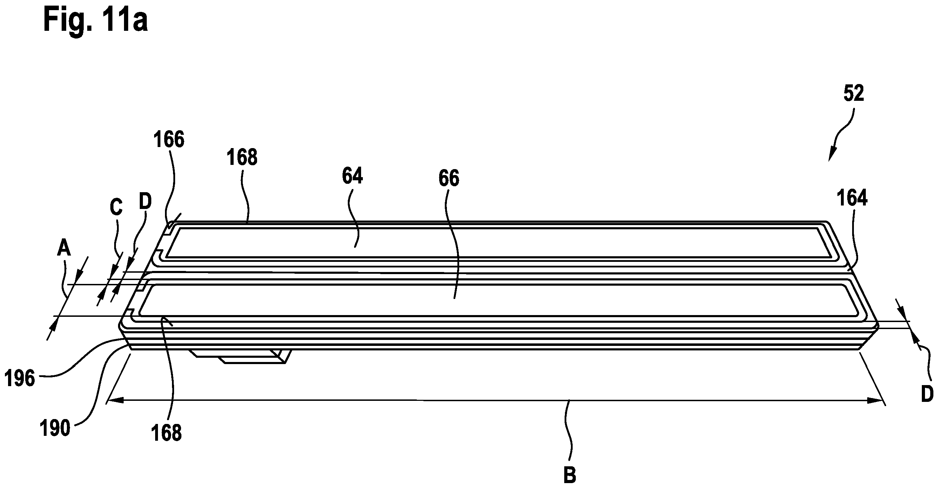

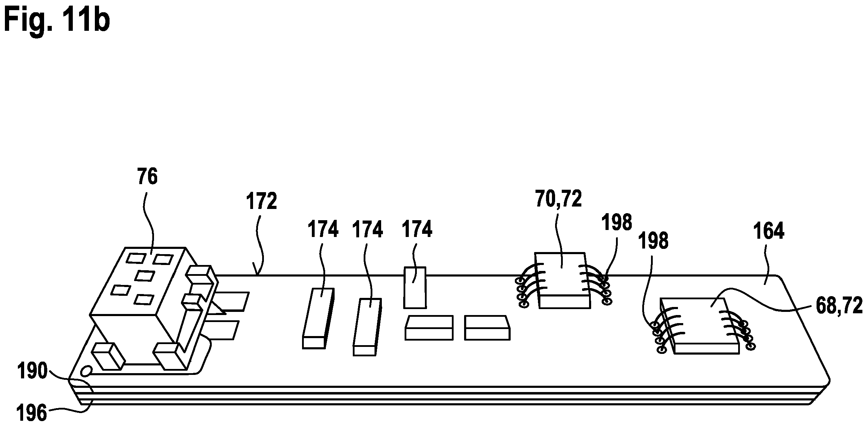

Figur 8a zeigt eine perspektivische Ansicht des Aufbaus des erfindungsgemäßen Berührungssensormoduls 52 in einem ersten Ausführungsbeispiel. In Figur 8b ist der Aufbau in einem seitlichen Schnitt dargestellt. Das Berührungssensormodul 52 ist als eine Leiterplatte 164 mit einer Gesamtbreite von ca. 9 mm und einer Gesamtlänge von ca. 45 mm ausgebildet, wobei die Leiterplatte 164 auf einer ersten Seite 166 die erste Sensorelektrode 64 und die zweite Sensorelektrode 66 trägt. Die Sensorelektroden 64, 66 sind als offene Kupferleiterbahnen mit einer Breite A und einer Länge B ausgebildet. Zwischen den Sensorelektroden 64, 66 ist mittig mit einem Abstand C zu den Sensorelektroden 64, 66 eine isolierte Masseleiterbahn 168 mit einer Breite D und der Länge B der Sensorelektroden 64, 66 angeordnet, die als Gegenelektrode der Sensorelektroden 64, 66 dient und die eine gegenseitige Beeinflussung der Sensorelektroden 64, 66 verhindert. Das Potential der Masseleiterbahn 168 liegt auf dem Potential eines Masseanschlusses der Sensor-Prozessoren 68, 70 (vergleiche hierzu auch Figur 11). Im gezeigten Ausführungsbeispiel beträgt die Breite A ca. 2 mm und die Länge B ca. 26 mm. Der Abstand C zwischen den Sensorelektroden 64, 66 und der Masseleiterbahn 168 liegt bei ca. 1,5 mm, während die Breite D der Masseleiterbahn einen Wert von ca. einem Millimeter hat. Die von den äußeren Ausmaßen der Sensorelektroden 64, 66 und der Masseleiterbahn 168 aufgespannte Fläche der ersten Seite 166 definiert einen ersten Bereich 170.

Auf einer der ersten Seite 166 gegenüberliegenden zweiten Seite 172 der Leiterplatte 164 sind die vierpolige Schnittstelle 76 sowie diverse Elektronikbauelemente 174, wie beispielsweise der erste und der zweite Sensor-Prozessor 68, 70, bevorzugt in SMD-Technik aufgelötet (vgl. auch Figur 8b), wobei ein zweiter Bereich 176 der zweiten Seite 172, der dem ersten Bereich 170 der ersten Seite 166 der Leiterplatte 164 entspricht, als eine Gitterstruktur ausgebildet ist, deren Potential entsprechend der Masseleiterbahn 168 auf dem Potential eines Masseanschlusses der Sensor-Prozessoren 68, 70 liegt. Auf diese Weise können störende Einflüsse etwaiger Elektronikbauelemente 174 auf die Sensorelektroden 64, 66 weitestgehend vermieden werden, was zudem die Genauigkeit der Sensierung erhöht. Zudem ermöglicht der Abgleich der einzelnen Potentiale durch die Sensor-Prozessoren 68, 70 eine weitere Minimierung der Empfindlichkeit gegenüber Störeinflüsse und damit eine entsprechend gesteigerte Sensierungsgenauigkeit der Sensorelektroden 64, 66.

Benachbart zum zweiten Bereich 176 ist ein dritter Bereich 178 auf der zweiten Seite 172 der Leiterplatte 164 angeordnet, der insbesondere den ersten und den zweiten Sensor-Prozessor 68, 70 trägt. Dabei ist ein möglichst geringer Abstand zwischen den Sensor-Prozessoren 68, 70 und den auf der gegenüberliegenden, ersten Seite 166 der Leiterplatte 164 angeordneten Sensorelektroden 64, 66 für eine hohe Genauigkeit und eine geringe Störanfälligkeit des Berührungssensormoduls 52 von großer Bedeutung.

Einfluss auf die Genauigkeit des Berührungssensormoduls 52 haben auch die auf der ersten Seite 166 der Leiterplatte 164 in einem vierten Bereich 180 angeordneten Elektronikbauelemente 174 sowie etwaige Lötstifte der Schnittstelle 76 zur lösbaren Verbindung mit der Mehrleiterverbindung 74. Hier gilt es insbesondere, die Bauhöhe der Lötstifte und der Elektronikbauelemente 174 so gering wie möglich zu halten, um die Sensorelektroden 64, 66 dicht an einer Innenwand der Griffbereiche 30 des Handgriffs 28 positionieren zu können. Erzielbar ist dies beispielsweise durch entsprechende Einbuchtungen 182 für die Lötstifte und die Elektronikbauelemente 174 in der Innenwand der Griffbereiche 30.

Jedes Berührungssensormodul 52 ist mit einem ca. 0,2 mm starken Klebestreifen 184 an der Innenwand des Griffbereichs 30 befestigt, wobei der Klebestreifen 184 die Ausmaße des ersten Bereichs 170, insbesondere die Länge B der Sensorelektroden 64, 66, besitzt. Die elektrische Kontaktierung des Berührungssensormoduls 52 mit der Mehrleiterverbindung 74 bzw. dem Flachbandkabel 78 erfolgt über die bereits in Verbindung mit der Figur 3 beschriebenen Schnittstelle 76, die die vier Leiter 80, 82, 84, 86 durchschleift, so dass bei Bedarf mehrere Berührungssensormodule 52 sehr einfach hintereinandergeschaltet werden können. Die Schnittstelle 76 hat dazu einen beidseitigen Anschluss für bis zu zwei vierpolige Steckkontakte 186 der Flachbandkabel 78, die bevorzugt in einer Schneidklemmverbindung ausgebildet sind. Um das Berührungssensormodul 52 vor Feuchtigkeit zu schützen, ist er in eine Vergussmasse 188, beispielsweise aus Silikon oder anderen elektrisch isolierenden Kunststoffen eingebettet.

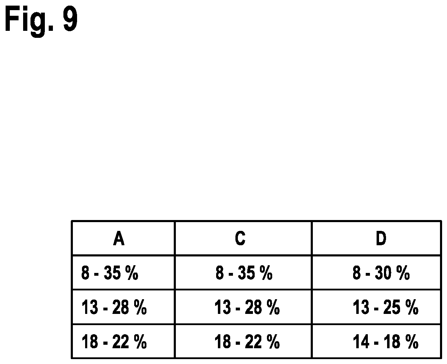

In Ergänzung zu den Maßangaben des ersten Ausführungsbeispiels des Berührungssensormoduls 52 gemäß Figur 8 sind auch abweichende Abmessungen A, B, C, D möglich. So kann insbesondere die Länge B der Sensorelektroden 64, 66 in Abhängigkeit von den Abmessungen des Handgriffs 28 bzw. der Griffbereiche 30 bis zu 100 mm betragen, was in etwa der Breite einer Hand entspricht. Für die Verhältnisse der Maße A, C und D der Sensorelektroden 64, 66, der Masseleiterbahn 168 und des Abstands zwischen diesen bezogen auf die Gesamtbreite der Leiterplatte 164 des Berührungssensormoduls 52 haben sich die Wertebereiche gemäß der Tabelle in Figur 9 als technisch machbar (erste Zeile), bevorzugt (zweite Zeile) und optimal (dritte Zeile) hinsichtlich einer möglichst hohen Sensiergenauigkeit und einer geringen Störanfälligkeit erwiesen.

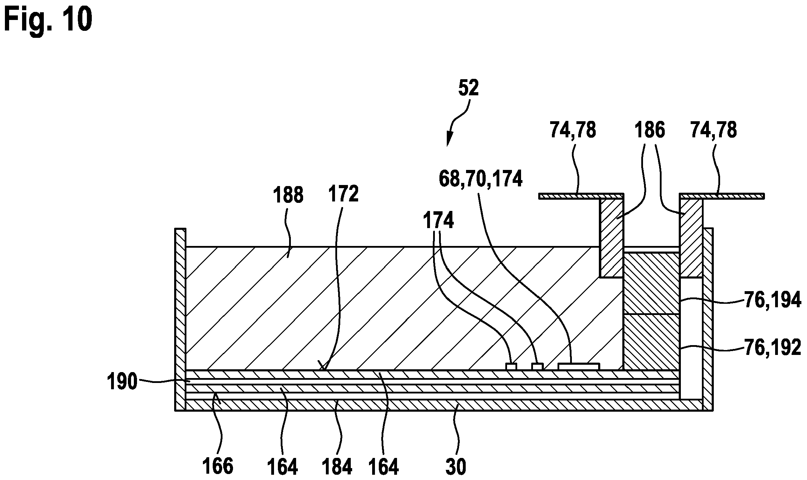

In Figur 10 ist eine Schnittansicht des Aufbaus des erfindungsgemäßen Berührungssensormoduls 52 in einem zweiten Ausführungsbeispiel gezeigt. Im Unterschied zum ersten Ausführungsbeispiel gemäß Figur 8 ist die Leiterplatte 164 nun als eine Multi-Layer-Leiterplatte aufgebaut, wobei eine Zwischenschicht 190 der Leiterplatte 164 als Masse-Layer ausgebildet ist, die mit einem Masseanschluss der Sensor-Prozessoren 68, 70 verbunden ist (vergleiche hierzu auch Figur 11). Weiterhin weist das Berührungssensormodul 52 nun auf seiner ersten Seite 166 keine Elektronikbauteile 174 mehr auf, so dass es vollflächig mit einem Klebestreifen 184 an der Innenseite des Griffbereichs 30 befestigt werden kann. Damit liegen die Sensorelektroden 64, 66 dichter am Außenbereich des Griffbereichs 30, was die Berührungsempfindlichkeit erhöht. Aufgrund der als Masse-Layer ausgebildeten Zwischenschicht 190 können sich die Sensorelektroden 64, 66 und die Masseleiterbahn 168 ohne Beeinträchtigungen der Sensierungsgenauigkeit durch etwaige auf der zweiten Seite 172 angeordnete Elektronikbauteile 174 über die gesamte Länge der Leiterplatte 164 erstrecken, was einen grö-ßeren Sensierungsbereich des Berührungssensormoduls zur Folge hat. Zudem ist nun eine direkte Durchverbindung von den Sensorelektroden 64, 66 zu den Sensor-Prozessoren 68, 70 möglich.

Ermöglicht wird der geringere Abstand des Berührungssensormoduls 52 zur Oberfläche des Griffbereichs 30 auch durch den Entfall der Lötstifte der Schnittstelle 76, die nun zweiteilig ausgebildet ist, wobei ein unterer Teil 192 als SMD-Buchse auf die zweite Seite 172 der Leiterplatte 164 gelötet ist, während ein oberer Teil 194 einerseits als Stecker für den unteren Teil 192 und andererseits als Buchse für die vierpoligen Steckkontakte 186 der Flachbandkabel 78 dient. Auch kann durch die vollflächige Klebeverbindung des Berührungssensormoduls 52 die Dicke des Griffbereichs 30 gegenüber dem ersten Ausführungsbeispiel gemäß Figur 8 um ca. die Hälfte auf weniger als einen Millimeter reduziert werden, was zu einer weiteren Steigerung der Sensierungsempfindlichkeit und - genauigkeit führt.

Figur 11 zeigt perspektivische Ansichten des Aufbaus des erfindungsgemäßen Berührungssensormoduls 52 in einem dritten Ausführungsbeispiel von einer ersten Seite (Figur 11a) und von einer zweiten Seite (Figur 11b). Wie im vorherigen Ausführungsbeispiel gemäß Figur 10 weist das Berührungssensormodul 52 auf seiner ersten Seite 166 keine Elektronikbauteile 174 auf, so dass es vollflächig mit an der Innenseite des Griffbereichs 30 befestigt werden kann. Im Unterschied zu den vorherigen Ausführungsbeispielen sind die erste Sensorelektrode 64 und die zweite Sensorelektrode 66 des Berührungssensormoduls 52 nun jeweils von einer Masseelektrode 168 im Wesentlichen vollständig, insbesondere zu mindestens 90 %, ringförmig umgeben. Die "offene" Ausgestaltung der die Sensorelektroden 64, 66 ringförmig umgebenden Masseelektroden 168 vermeidet bzw. verringert etwaige die Sensierung störende Resonanzen bzw. ein so genanntes "Ringing", d.h. ein Oszillieren der Sensorsignale.

Das Berührungssensormodul 52 ist als eine Multi-Layer-Leiterplatte aufgebaut, die entsprechend dem Ausführungsbeispiel gemäß Figur 10 auf ihrer ersten Seite 166 die Elektroden 64, 66, 168 und auf der der ersten Seite 166 gegenüberliegenden zweiten Seite 172 die Elektronikauteile 174, wie beispielsweise den ersten und den zweiten Sensor-Prozessor 68, 70, sowie die Schnittstelle 76, aufweist. Zudem ist eine erste Zwischenschicht 190 der Leiterplatte 164 als Masse-Layer und eine weitere Zwischenschicht 196 als eine Gitterstruktur ausgebildet. Die erste Zwischenschicht 190 ist räumlich zwischen der ersten Seite 166 und die weiteren Zwischenschicht 196 und die weitere Zwischenschicht 196 räumlich zwischen der ersten Zwischenschicht 190 und der zweiten Seite 172 der Leiterplatte 164 angeordnet. Die Zwischenschichten 190, 192 liegen entsprechend der Masseleiterbahnen 168 auf dem Potential eines Masseanschlusses 198 der Sensor-Prozessoren 68, 70. In Kombination mit den Sensorelektroden 64, 66 kann damit das Potential der Masseelektroden 168, der ersten und weiteren Zwischenschicht 190, 196 und der Sensorelektroden 64, 66 durch den jeweils mit diesen verbundenen Sensor-Prozessor 68, 70 abgeglichen werden, um etwaige Störeinflüsse zu minimieren bzw. die Sensierungsgenauigkeit der Sensorelektroden 64, 66 zu erhöhen.

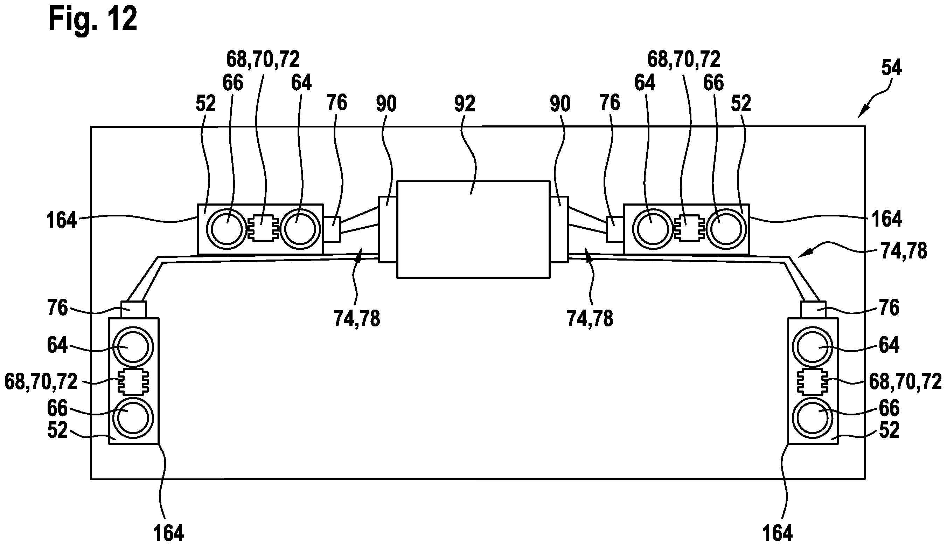

In Figur 12 ist ein Schaltbild eines zweiten Ausführungsbeispiels der Schaltungstopologie des erfindungsgemäßen Sicherheitssystems 54 im Handgriff 28 des Elektrogeräts 10 dargestellt. Das Sicherheitssystem 54 gemäß unterscheidet sich im Wesentlichen vom Sicherheitssystem 54 gemäß der Figuren 3 und 4 dadurch, dass statt einer durchgeschleiften Mehrleiterverbindung 74 in den Berührungssensormodulen 52 jedes der vier Berührungssensormodule 52 einzeln über ein separates Flachbandkabel 78 mit dem Anschlussterminal 90 der zentralen Schalteinheit 92 des Sicherheitssystems 54 lösbar verbindbar ist. Demnach schleift die vierpolige Schnittstelle 76 des Berührungssensormoduls 52 die vier Leiter 80, 82, 84, 86 der Mehrleiterverbindung 74 nicht mehr durch. Die Sensorelektroden 64, 66 sind hier als runde Kupfer-Tabs ausgebildet, die nebeneinander auf der Leiterplatte 164 des Berührungssensormoduls 52 angeordnet sind. Ebenso befinden sich auf jeder Leiterplatte 164 ein erster und ein zweiter Sensor-Prozessor 68, 70, die jeweils elektrisch mit den beiden Sensorelektroden 64, 66 verbunden sind. Die beiden Sensor-Prozessoren 68, 70 arbeiten als Analog-Digital-Wandler 72 zur Umwandlung der analogen Spannungssignale der Sensorelektroden 64, 66 in digitale, insbesondere binäre, Ausgangssignal $S_{n1}$ bzw. $S_{n2}$ entsprechend dem ersten Ausführungsbeispiel. Der Vorteil der Schaltungstopologie des Sicherheitssystems 54 mit einer zentralen Schalteinheit 92 liegt in einer sehr hohen Unempfindlichkeit gegenüber Rauschen und anderen, insbesondere hochfrequenten, Störungen. Andererseits ist das Sicherheitssystem 54 gemäß Figur 11a gegenüber dem ersten Ausführungsbeispiel weniger flexibel, weil die maximale Anzahl der mit der zentralen Schalteinheit 92 verbindbaren Berührungssensormodule 52 durch das Anschlussterminal 90 vorgegeben ist.

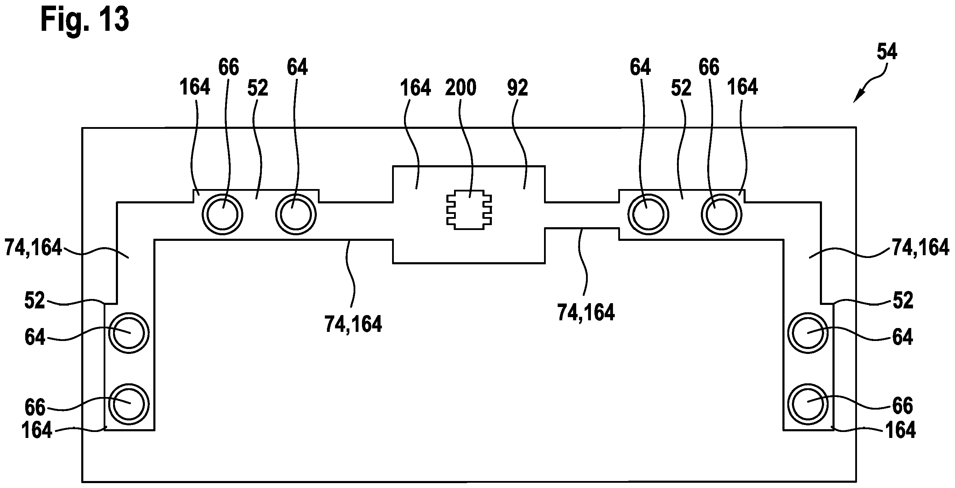

Statt eines Flachbandkabels 78 kann die Mehrleiterverbindung 74 zwischen den Berührungssensormodulen 52 gemäß Figur 13 auch als Leiterplatte 164 mit vier entsprechenden Kupferleiterbahnen als Leiter ausgebildet sein. Im Unterschied zu den beiden vorherigen Ausführungsbeispielen ist im dritten Ausführungsbeispiel statt der dezentralen Sensor-Prozessoren 64, 66 der Berührungssensormodule 52 vorgesehen, dass die ebenfalls als Leiterplatte 164 ausgebildete zentrale Schalteinheit 92 einen zentralen Sensor-Prozessor 200 aufweist. Mit besonderem Vorteil ergibt sich hierdurch eine sehr kostengünstige Variante des Sicherheitssystems 54, die zudem sehr einfach eingebaut oder ausgetauscht werden kann, deren Anwendung aber auch sehr speziell auf das jeweilige Elektrogerät 10 beschränkt ist. Hinzu kommt, dass die Ausgangssignale $S_{n1}$, $S_{n2}$ der Sensorelektroden 64, 66 bedingt durch den zentralen Sensor-Prozessor 200 analog übertragen werden und somit empfindlicher gegenüber Rauschen und Störsignalen sind. Zudem müssen die Sensorelektroden 64, 66 einzeln kalibriert werden, um eine möglichst hohe Sensierempfindlichkeit zu erzielen.

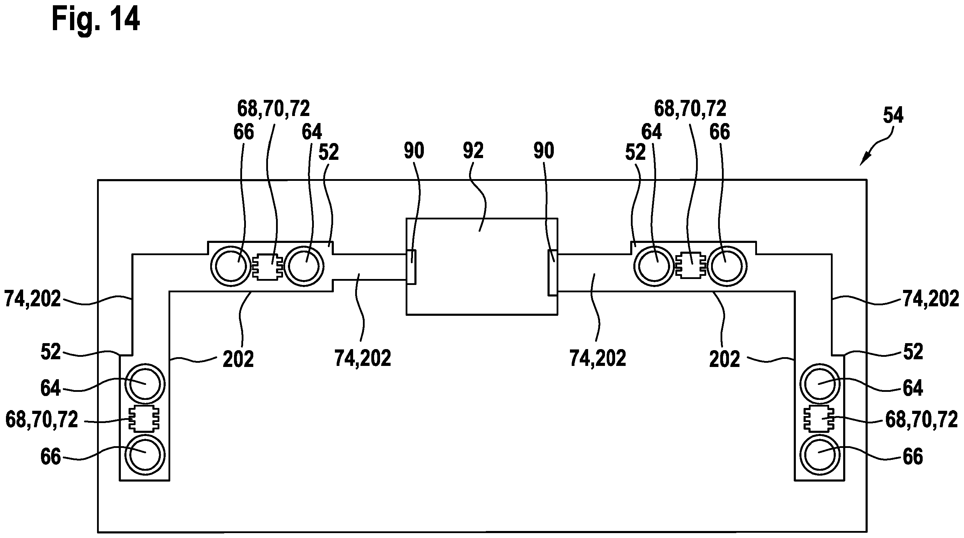

Im vierten Ausführungsbeispiel gemäß Figur 14 wird im Unterschied zum ersten Ausführungsbeispiel eine Flexi-Folie 202 als Mehrleiterverbindung 74 und als Träger für die Berührungssensormodule 52 verwendet. Dies erlaubt gegenüber dem dritten Ausführungsbeispiel gemäß Figur 13 eine universellere Nutzung für unterschiedliche Elektrogeräte 10 in Verbindung mit den Vorteilen einer dezentralen Analog-Digital-Wandlung durch die Sensor-Prozessoren 68, 70 der Berührungssensormodule 52 und verhältnismäßig geringen Herstellungskosten, bietet aber andererseits nicht die Flexibilität des ersten Ausführungsbeispiels, was das Hinzufügen weiterer Berührungssensormodule 52 angeht.

Es sei abschließend noch darauf hingewiesen, dass die in allen vier Ausführungsbeispielen des Sicherheitssystems 54 gezeigte Anzahl von vier Berührungssensormodulen 52 exemplarisch zu verstehen ist. Es können je nach Anforderung und Größe des Handgriffs 28 bzw. Anzahl der Griffbereiche 30 auch nur zwei oder mehr als vier Berührungssensormodule 52 in dem erfindungsgemäßen Sicherheitssystem 54 zum Einsatz kommen.

**Patentansprüche**

1. Elektrogerät (10) mit zumindest einem Handgriff (28) zur sicheren Führung des Elektrogeräts (10) durch einen Bediener und mit einem Sicherheitssystem (54), wobei am Handgriff (28) mindestens zwei voneinander beabstandete Griffbereiche (30) mit jeweils zumindest einem Berührungssensormodul (52) vorgesehen sind und jedes Berührungssensormodul (52) zumindest zwei Sensorelektroden (64, 66) aufweist, die jeweils elektrisch mit dem Sicherheitssystem (54) verbunden sind, wobei das Sicherheitssystem (54) derart ausgebildet ist, dass der Bediener zum sicheren Betrieb des Elektrogeräts (10) mindestens eine der ersten und mindestens eine der zweiten Sensorelektroden (64, 66) der Berührungssensormodule (52) mit zumindest einem Körperteil, insbesondere mit einem Teil zumindest einer Hand, berühren muss, wobei jeder Sensorelektrode (64, 66) ein Sensor-Prozessor (68, 70) als Analog-Digital-Wandler (72) zur Erzeugung eines digitalen Ausgangssignals (S11, S12, S21, S22, S31, S32, S41, S42), insbesondere eines binären Ausgangssignals (S11, S12, S21, S22, S31, S32, S41, S42), zugeordnet ist, **dadurch gekennzeichnet, dass** eine Auswertelogik (122) derart konfiguriert ist, dass die Auswertelogik (122) die Ausgangssignale (S11, S21, S31, S41) aller ersten Sensorelektroden (64) der Berührungssensormodule (52) zu einem ersten Sensor-Signal (S1) und die Ausgangssignale (S12, S22, S32, S42) aller zumindest zweiten Sensorelektroden (66) der Berührungssensormodule (54) zu zumindest einem zweiten Sensor-Signal (S2) logisch verknüpft, und dass zumindest die Ausgangssignale (S11, S21, S31, S41) aller ersten Sensorelektroden (64) logisch im Sinne einer Disjunktion (OR) und die Ausgangssignale (S12, S22, S32, S42) aller zumindest zweiten Sensorelektroden (66) logisch im Sinne einer Exklusion (NAND) verknüpft sind.

2. Elektrogerät (10) nach Anspruch 1, **dadurch gekennzeichnet, dass** die Auswertelogik (122) einen ersten elektrischen Schalter (124) einschaltet, wenn das erste Sensor-Signal (S1) einen HIGH-Pegel aufweist, und zumindest einen zweiten elektrischen Schalter (126) einschaltet, wenn das zumindest eine zweite Sensor-Signal (S2) einen HIGH-Pegel aufweist, wobei ein Betrieb des Elektrogeräts (10) nur dann möglich ist, wenn der erste und der zumindest eine zweite Schalter (124, 126) eingeschaltet sind.

3. Elektrogerät (10) nach Anspruch 3, **dadurch gekennzeichnet, dass** ein Einschalten des ersten und des zweiten elektrischen Schalters (124, 126) ein Durchschalten zumindest eines weiteren Schalters (106), insbesondere eines Relais (106), zur Energieversorgung eines Elektromotors (20) und/oder einer Steuer- oder Regelelektronik (18) für den Elektromotor (10) des Elektrogeräts (10) bewirkt.

4. Elektrogerät (10) nach einem der vorhergehenden Ansprüche, **dadurch gekennzeichnet, dass** der Handgriff (28) ausgehend von seiner Mittenachse (M) in Hauptführungsrichtung (F) des Elektrogeräts (10) jeweils zumindest einen Griffbereich (30) mit einem Berührungssensormodul (52) aufweist.

5. Elektrogerät (10) nach einem der vorhergehenden Ansprüche, **dadurch gekennzeichnet, dass** der Handgriff (28) ausgehend von seiner Mittenachse (M) in Hauptführungsrichtung (F) des Elektrogeräts (10) jeweils einen als angewinkelten Arm (56) ausgebildeten Griffteil (58) mit mindestens zwei Griffbereichen (30) aufweist, wobei in jedem Griffbereich (30) mindestens ein Berührungssensormodul (52) angeordnet ist.

6. Elektrogerät (10) nach einem der vorhergehenden Ansprüche, **gekennzeichnet durch** eine elektrische Verbindung zwischen den Berührungssensormodulen (52) einerseits und zwischen den Berührungssensormodulen (52) und einer zentralen Schalteinheit (92) andererseits über jeweils eine elektrische Mehrleiterverbindung (74), wobei zwischen einem ersten Leiter (80) und einem zweiten Leiter (82) der Mehrleiterverbindung (74) für die Ausgangsignale (S11, S21, S31, S41, S12, S22, S32, S42) zumindest ein dritter Leiter (84) und ein vierter Leiter (86) für eine Energieversorgung der Berührungssensormodule (52) angeordnet ist.

7. Elektrogerät (10) nach Anspruch 6, **dadurch gekennzeichnet, dass** im berührungslosen Zustand des Sicherheitssystems (54) jeweils ein Leiter (80, 82) für die Ausgangssingale (S11, S21, S31, S41, S12, S22, S32, S42) und ein Leiter (84, 86) für die Energieversorgung der Berührungssensormodule (52) mit gleichem Spannungspotential (Active HIGH, GND; $V_H$, Active LOW) nebeneinander angeordnet sind.

8. Verfahren zum Betreiben eines Elektrogeräts (10) nach einem der vorhergehenden Ansprüche durch einen Bediener, **dadurch gekennzeichnet, dass** in einem ersten Schritt (128) der Bediener vor Inbetriebnahme des Elektrogeräts (10) einen elektromechanischen Taster (94) betätigen muss, um das Sicherheitssystem (54) und die Berührungssensormodule (52) des Elektrogeräts (10) mit Energie zu versorgen (130).

9. Verfahren nach Anspruch 8, **dadurch gekennzeichnet, dass** in einem nachfolgenden Schritt (132) ein Berühren mindestens eine der ersten und mindestens eine der zweiten Sensorelektroden (64, 66) der Berührungssensormodule (52) durch den Bediener die Inbetriebnahme des Elektrogeräts (10) derart bewirkt, dass ein Elektromotor (20) und/oder eine Steuer- oder Regelelektronik (18) für den Elektromotor (20) des Elektrogeräts (10) mit elektrischer Energie versorgt wird (134).

10. Verfahren nach einem der vorhergehenden Ansprüche 8 oder 9, **dadurch gekennzeichnet, dass** nach dem Loslassen des elektromechanischen Tasters (94) in einem nachfolgenden Schritt (136) ein Timer gestartet wird (138), nach dessen Ablauf eine definierte Zeitspanne (T) beendet ist.

11. Verfahren nach Anspruch 10, **dadurch gekennzeichnet, dass** der Bediener mindestens eine der ersten und mindestens eine der zweiten Sensorelektroden (64, 66) der Berührungssensormodule (52) zur Inbetriebnahme des Elektrogeräts (10) in weiteren Schritten (132, 136, 138) entweder innerhalb der definierten Zeitspanne (T) nach dem Loslassen des elektromechanischen Tasters (94) oder während des Gedrückthaltens des mechanischen Tasters (94) berührt haben muss.

12. Verfahren nach einem der vorhergehenden Ansprüche 8 bis 11, **dadurch gekennzeichnet, dass** das Elektrogerät (10) in einem letzten Schritt (144) beim Loslassen sämtlicher Berührungssensormodule (52) durch den Bediener abgeschaltet wird.

**Claims**

1. Electrical appliance (10) having at least one handle (28) for the safe guidance of the electrical appliance (10) by an operator and having a safety system (54), wherein at least two grip regions (30) are provided on the handle (28) spaced apart from one another, each having at least one touch sensor module (52) and and each touch sensor module (52) having at least two sensor electrodes (64, 66), which are each electrically connected to the safety system (54), wherein the safety system (54) is designed in such a manner that the operator must touch at least one of the first and at least one of the second sensor electrodes (64, 66) of the touch sensor modules (52) with at least one part of the body, more particularly with a part of at least one hand, for safe operation of the electrical appliance (10), wherein each sensor electrode (64, 66) is assigned a sensor processor (68, 70) as an analogue-to-digital converter (72) for generating a digital output signal (S11, S12, S21, S22, S31, S32, S41, S42), in particular a binary output signal (S11, S12, S21, S22, S31, S32, S41, S42), **characterized in that** an evaluation logic system (122) is configured in such a way that the evaluation logic system (122) logically links the output signals (S11, S21, S31, S41) of all the first sensor electrodes (64) of the touch sensor modules (52) to a first sensor signal (S1) and the output signals (S12, S22, S32, S42) of all of the at least second sensor electrodes (66) of the touch sensor modules (54) to at least one second sensor signal (S2) and **in that** at least the output signals (S11, S21, S31, S41) of all of the first sensor electrodes (64) are logically linked in the sense of a disjunction (OR) and the output signals (S12, S22, S32, S42) of all of the at least second sensor electrodes (66) are logically linked in the sense of an exclusion (NAND).

2. Electrical appliance (10) according to Claim 1, **characterized in that** the evaluation logic system (122) switches on a first electrical switch (124) when the first sensor signal (S1) has a HIGH level and switches on at least one second electrical switch (126) when the at least one second sensor signal (S2) has a HIGH level, wherein operation of the electrical appliance (10) is only possible when the first and the at least one second (124, 126) are switched on.

3. Electrical appliance (10) according to Claim 3, **characterized in that** switching on the first and the second electrical switch (124, 126) causes at least one further switch (106), in particular a relay (106), for supplying energy to an electric motor (20) and/or an open-loop or closed-loop control electronics system (18) for the electric motor (10) of the electrical appliance (10) to be connected.

4. Electrical appliance (10) according to one of the preceding claims, **characterized in that** the handle (28) has at least one respective grip region (30) having a touch sensor module (52), said grip region starting from the central axis (M) of said handle in the main guide direction (F) of the electrical appliance (10).

5. Electrical appliance (10) according to one of the preceding claims, **characterized in that** the handle (28) has a respective grip part (58) having at least two grip regions (30), said grip part being in the form of an angled arm (56) and starting from the central axis (M) of said handle in the main guide direction (F) of the electrical appliance (10), wherein at least one touch sensor module (52) is arranged in each grip region (30).

6. Electrical appliance (10) according to one of the preceding claims, **characterized by** an electrical connection between the touch sensor modules (52) on the one hand and between the touch sensor modules (52) and a central switching unit (92) on the other hand by means of a respective electrical multi-conductor connection (74), wherein at least one third conductor (84) and one fourth conductor (86) for supplying energy to the touch sensor modules (52) are arranged between a first conductor (80) and a second conductor (82) of the multi-conductor connection (74) for the output signals (S11, S21, S31, S41, S12, S22, S32, S42).

7. Electrical appliance (10) according to Claim 6, **characterized in that**, in the contactless state of the safety system (54), in each case a conductor (80, 82) for the output signals (S11, S21, S31, S41, S12, S22, S32, S42) and a conductor (84, 86) for supplying energy to the touch sensor modules (52) having same voltage potential (Active HIGH, GND; $V_H$, Active LOW) are arranged next one another.

8. Method for operating an electrical appliance (10) according to one of the preceding claims by an operator, **characterized in that**, in a first step (128), the operator must actuate an electromechanical button (94) before starting up the electrical appliance (10) in order to supply energy (130) to the safety system (54) and the touch sensor modules (52) of the electrical appliance (10).

9. Method according to Claim 8, **characterized in that**, in a subsequent step (132), an operator touching at least one of the first and at least one of the second sensor electrodes (64, 66) of the touch sensor modules (52) causes the electrical appliance (10) to start up in such a way that an electric motor (20) and/or an open-loop or closed-loop control electronics system (18) for the electric motor (20) of the electrical appliance (10) is supplied with electrical energy (134).

10. Method according to either of the preceding Claims 8 and 9, **characterized in that**, after the electromechanical button (94) has been released, in a subsequent step (136), a timer is started (138), after the expiry of which a defined period of time (T) is ended.

11. Method according to Claim 10, **characterized in that** the operator must have touched at least one of the first and at least one of the second sensor electrodes (64, 66) of the touch sensor modules (52) to start up the electrical appliance (10) in further steps (132, 136, 138) either within the defined period of time (T) after the electromechanical button (94) has been released or while the mechanical button (94) is held down.

12. Method according to one of the preceding Claims 8 to 11, **characterized in that** the electrical appliance (10) is switched off in a last step (144) when all of the touch sensor modules (52) are released by the operator.

## Revendications

1. Appareil électrique (10) comprenant au moins une poignée (28) destinée au guidage sécurisé de l'appareil électrique (10) par un opérateur et comprenant un système de sécurité (54), au moins deux zones de préhension (30) espacées l'une de l'autre étant prévues sur la poignée (28) comportant respectivement au moins un module capteur de contact (52) et chaque module capteur de contact (52) possédant au moins deux électrodes de capteur (64, 66), qui sont respectivement reliées électriquement au système de sécurité (54), le système de sécurité (54) étant configuré de telle sorte que pour un fonctionnement en toute sécurité de l'appareil électrique (10), l'opérateur doit toucher au moins l'une des premières et au moins l'une des deuxièmes électrodes de capteur (64, 66) des modules de détection de contact (52) avec au moins une partie du corps, notamment avec une partie d'au moins une main, un processeur de détection (68, 70) sous la forme d'un convertisseur analogique-numérique (72) étant associé à chaque électrode de capteur (64, 66) pour générer un signal de sortie numérique (S11, S12, S21, S22, S31, S32, S41, S42), notamment un signal de sortie binaire (S11, S12, S21, S22, S31, S32, S41, S42), **caractérisé en ce qu'**une logique d'évaluation (122) est configurée de telle sorte que la logique d'évaluation (122) transforme les signaux de sortie (S11, S21, S31, S41) de toutes les premières électrodes de capteur (64) des modules capteurs de contact (52) en un premier signal de capteur (S1) et les signaux de sortie (S12, S22, S32, S42) de toutes les au moins deuxièmes électrodes de capteur (66) des modules capteurs de contact (54) sont combinés logiquement en au moins un deuxième signal de capteur (S2), et **en ce qu'**au moins les signaux de sortie (S11, S21, S31, S41) de toutes les premières électrodes de capteur (64) sont combinés logiquement au sens d'une disjonction (OR) et les signaux de sortie (S12, S22, S32, S42) de toutes les au moins deuxièmes électrodes de capteur (66) sont combinés logiquement au sens d'une exclusion (NAND).

2. Appareil électrique (10) selon la revendication 1, **caractérisé en ce que** la logique d'évaluation (122) met en circuit un premier commutateur électrique (124) lorsque le premier signal de capteur (S1) présente un niveau HAUT, et met en circuit au moins un deuxième commutateur électrique (126) lorsque l'au moins un deuxième signal de capteur (S2) présente un niveau HAUT, un fonctionnement de l'appareil électrique (10) n'étant possible que lorsque le premier et l'au moins un deuxième commutateur (124, 126) sont mis en circuit.

3. Appareil électrique (10) selon la revendication 3, **caractérisé en ce qu'**une mise en circuit du premier et du deuxième commutateur électrique (124, 126) provoque une connexion d'au moins un commutateur supplémentaire (106), notamment d'un relais (106), pour l'alimentation en énergie d'un moteur électrique (20) et/ou d'une électronique de commande ou de régulation (18) pour le moteur électrique (10) de l'appareil électrique (10).

4. Appareil électrique (10) selon l'une des revendications précédentes, **caractérisé en ce que** la poignée (28) possède respectivement, à partir de son axe médian (M) dans la direction principale de guidage (F) de l'appareil électrique (10), au moins une zone de préhension (30) pourvue d'un module capteur de contact (52).

5. Appareil électrique (10) selon l'une des revendications précédentes, **caractérisé en ce que** la poignée (28) possède respectivement, en partant de son axe médian (M) dans la direction principale de guidage (F) de l'appareil électrique (10), une partie de préhension (58) réalisée sous la forme d'un bras coudé (56) avec au moins deux zones de préhension (30), au moins un module capteur de contact (52) étant disposé dans chaque zone de préhension (30).

6. Appareil électrique (10) selon l'une des revendications précédentes, **caractérisé par** une liaison électrique entre les modules capteurs de contact (52) d'une part et entre les modules capteurs de contact (52) et une unité centrale de commutation (92) d'autre part, respectivement par le biais d'une liaison électrique à conducteurs multiples (74), au moins un troisième conducteur (84) et un quatrième conducteur (86) pour une alimentation en énergie des modules capteurs de contact (52) étant disposés entre un premier conducteur (80) et un deuxième conducteur (82) de la liaison à conducteurs multiples (74) pour les signaux de sortie (S11, S21, S31, S41, S12, S22, S32, S42).

7. Appareil électrique (10) selon la revendication 6, **caractérisé en ce que** dans l'état sans contact du système de sécurité (54), un conducteur (80, 82) pour les signaux de sortie (S11, S21, S31, S41, S12, S22, S32, S42) et un conducteur (84, 86) pour l'alimentation en énergie des modules capteurs de contact (52) avec le même potentiel de tension (actif au niveau HAUT, GND ; $V_H$, actif au niveau BAS) sont respectivement disposés l'un à côté de l'autre.

8. Procédé pour faire fonctionner un appareil électrique (10) selon l'une des revendications précédentes par un opérateur, **caractérisé en ce que**, dans une première étape (128), l'opérateur doit, avant la mise en service de l'appareil électrique (10), actionner un bouton-poussoir électromécanique (94) pour alimenter en énergie (130) le système de sécurité (54) et les modules capteurs de contact (52) de l'appareil électrique (10).

9. Procédé selon la revendication 8, **caractérisé en ce que**, dans une étape suivante (132), un contact par l'opérateur d'au moins l'une des premières et au moins l'une des deuxièmes électrodes de capteur (64, 66) des modules capteurs de contact (52) provoque la mise en service de l'appareil électrique (10) de telle sorte qu'un moteur électrique (20) et/ou une électronique de commande ou de régulation (18) pour le moteur électrique (20) de l'appareil électrique (10) est alimenté(e) en énergie électrique (134).

10. Procédé selon l'une des revendications précédentes 8 ou 9, **caractérisé en ce qu'**après le relâchement du bouton-poussoir électromécanique (94), dans une étape suivante (136), une minuterie est démarrée (138), à l'expiration de laquelle un intervalle de temps (T) défini prend fin.

11. Procédé selon la revendication 10, **caractérisé en ce que** l'opérateur doit avoir touché au moins l'une des premières électrodes de capteur et au moins l'une des deuxièmes électrodes de capteur (64, 66) des modules capteurs de contact (52) pour la mise en service de l'appareil électrique (10) au cours d'étapes supplémentaires (132, 136, 138), soit dans l'intervalle de temps (T) défini après le relâchement du bouton-poussoir électromécanique (94), soit pendant que le bouton-poussoir mécanique (94) est maintenu enfoncé.

**12.** Procédé selon l'une des revendications précédentes 8 à 11, **caractérisé en ce que** l'appareil électrique (10), dans une dernière étape (144), est mis à l'arrêt lorsque tous les modules capteurs de contact (52) sont relâchés par l'opérateur.

# Fig. 1

Fig. 2

Fig. 3

EP 4 081 012 B1

EP 4 081 012 B1

**Fig. 4**

# Fig. 5

| Ausgangssignale der ersten Sensorelemente 64 (Active HIGH) vierer Berührungssensoren 52 | | | | erstes Sensorsignal | Ausgangssignale der zweiten Sensorelemente 66 (Active LOW) vierer Berührungssensoren 52 | | | | zweites Sensorsignal |
|---|---|---|---|---|---|---|---|---|---|
| $S_{11}$ | $S_{21}$ | $S_{31}$ | $S_{41}$ | $S_1$ | $S_{12}$ | $S_{22}$ | $S_{32}$ | $S_{42}$ | $S_2$ |
| LOW | LOW | LOW | LOW | LOW | HIGH | HIGH | HIGH | HIGH | LOW |
| LOW | LOW | LOW | HIGH | HIGH | HIGH | HIGH | HIGH | LOW | HIGH |
| LOW | LOW | HIGH | LOW | HIGH | HIGH | HIGH | LOW | HIGH | HIGH |
| LOW | LOW | HIGH | HIGH | HIGH | HIGH | HIGH | LOW | LOW | HIGH |
| LOW | HIGH | LOW | LOW | HIGH | HIGH | LOW | HIGH | HIGH | HIGH |
| LOW | HIGH | LOW | HIGH | HIGH | HIGH | LOW | HIGH | LOW | HIGH |
| LOW | HIGH | HIGH | LOW | HIGH | HIGH | LOW | LOW | HIGH | HIGH |
| LOW | HIGH | HIGH | HIGH | HIGH | HIGH | LOW | LOW | LOW | HIGH |
| HIGH | LOW | LOW | LOW | HIGH | LOW | HIGH | HIGH | HIGH | HIGH |
| HIGH | LOW | LOW | HIGH | HIGH | LOW | HIGH | HIGH | LOW | HIGH |
| HIGH | LOW | HIGH | LOW | HIGH | LOW | HIGH | LOW | HIGH | HIGH |
| HIGH | LOW | HIGH | HIGH | HIGH | LOW | HIGH | LOW | LOW | HIGH |
| HIGH | HIGH | LOW | LOW | HIGH | LOW | LOW | HIGH | HIGH | HIGH |
| HIGH | HIGH | LOW | HIGH | HIGH | LOW | LOW | HIGH | LOW | HIGH |
| HIGH | HIGH | HIGH | LOW | HIGH | LOW | LOW | LOW | HIGH | HIGH |
| HIGH | HIGH | HIGH | HIGH | HIGH | LOW | LOW | LOW | LOW | HIGH |

# Fig. 6

# Fig. 7

# Fig. 8a

EP 4 081 012 B1

# Fig. 8b

# Fig. 9

| A | C | D |
|---|---|---|
| 8 - 35 % | 8 - 35 % | 8 - 30 % |
| 13 - 28 % | 13 - 28 % | 13 - 25 % |
| 18 - 22 % | 18 - 22 % | 14 - 18 % |

EP 4 081 012 B1

# Fig. 10

**Fig. 11a**

EP 4 081 012 B1

EP 4 081 012 B1

# Fig. 11b

Fig. 12

**Fig. 13**

EP 4 081 012 B1

# Fig. 14

EP 4 081 012 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 29521118 U1
- EP 3120684 A1
- EP 2447967 A1
- EP 1440771 A1